# EUROPEAN PATENT APPLICATION

(11) **EP 4 694 058 A1**
(43) Date of publication of application: **11.02.2026**
(21) Application number: 23929539.7
(22) Date of filing: 31.03.2023
(51) Int. Cl.: H04L 41/0894

(54) **INFORMATION PROCESSING METHOD AND APPARATUS, COMMUNICATION DEVICE, AND STORAGE MEDIUM**

(71) Applicant: Beijing Xiaomi Mobile Software Co., Ltd., Beijing 100085 (CN)
(72) Inventor: LIU, Jianning, Beijing 100085 (CN)
(74) Representative: Dehns Germany Partnerschaft mbB
(86) International application number: PCT/CN2023/085807
(87) International publication number: WO 2024/197956

(57) **Abstract**

Embodiments of the present disclosure provide an information processing method and apparatus, a communication device, and a storage medium. The information processing method executed by a first network device may comprise: receiving a first request message, wherein the first request message comprises: a first identifier and a first configuration, the first identifier is used for identifying a Personal Internet of Things Network Element (PINE), the first configuration is used for configuring a Personal Internet of Things Network (PIN), and the PINE includes: a PINE with gateway capability (PEGC); and determining first data of the PIN according to the first identifier and the first configuration, wherein the first data is data for generating a policy of the PIN. PIN creation and policy data creation are achieved in a PIN creation process instead of using two processes to perform PIN creation and policy data creation respectively, thereby reducing creation processes and the signaling overhead introduced by the two creation processes.

## Description

### TECHNICAL FIELD

The disclosure relates to, but is not limited to, the field of wireless communication technology, and in particular to a method and an apparatus for processing information, a communication device and a storage medium.

### BACKGROUND

A Personal Internet of Things Network (PIN) may include one or more Personal Internet of Things Network Elements (PINEs) (also called Personal IoT Members). PINEs may be divided into three categories: normal PINEs, PIN Elements with management capability (PEMC, also called Personal IoT Management Devices), and PIN Elements with Gateway Capability (PEGC, also called Personal IoT Gateway Devices or Elements with Gateway Capability). PINE may be locally managed by PEMC and/or PEGC.

During a PIN creation procedure, some creations of PIN-based communications are not covered.

### SUMMARY

Embodiments of the disclosure provide methods and apparatuses for processing information, a communication device and a storage medium.

A first aspect of embodiments of the disclosure provides a method for processing information performed by a first network device, the method further including:
receiving a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC); and
determining first data for the PIN based on the first identifier and the first configuration, in which the first data is data for generating a policy of the PIN.

A second aspect of embodiments of the disclosure provides a method for processing information performed by a second network device, the method further including:
receiving a third request message, in which the third request message includes a first identifier and a first configuration, the first identifier is configured to identify a personal internet of things network element (PINE), the first configuration is configured to configure a personal internet of things network (PIN), and the PINE includes a PINE with gateway capability (PEGC);
creating the PIN based on the third request message;
sending a third response message, in which the third response message includes second information, and the second information is configured to indicate a creation result of the PIN; and
sending a first request message, in which the first request message includes the first identifier and the first configuration, the first identifier and the first configuration are used for creating first data, and the first data is data for generating a policy of the PIN.

A third aspect of embodiments of the disclosure provides a method for processing information performed by a third network device, the method further including:
sending a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC);
receiving a first response message, in which the first response message includes first information, and the first information is a creation result of first data for the PIN; and
sending a second request message, in which a creation of the first data fails the second request message includes a second identifier and/or a second configuration, the second request message is configured to request a re-creation of the first data, and the first data is used for generating a policy of the PIN.

A fourth aspect of embodiments of the disclosure provides a method for processing information performed by a first type of application function (AF), the method including:
sending a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC);
receiving a first response message, in which the first response message includes first information, and the first information is configured to indicate a creation result of first data for the PIN;
sending a second request message, in which a creation of the first data fails, the second request message includes a second identifier and/or a second configuration, the second request message is configured to request a first network device to recreate second data, policy data is configured to generate a policy of the PIN, and a second type of AF is located outside a trust domain of the first network device.

A fifth aspect of embodiments of the disclosure provides a method for processing information performed by a second type of application function (AF), the method including:
sending a first request message, in which the first request message includes first identifier information of a personal internet of things network element (PINE) and first personal internet of things network (PIN) configuration data, the PINE at least includes a PINE with gateway capability (PEGC), the first request message is sent after a PIN is successfully created and the first request message is configured to request a creation of policy data for the PIN;
receiving a first response message, in which the first response message includes a creation result of the policy data;
in a case where the first response message indicates that the creation of the policy data for the PIN fails, sending a second request message, in which the second request message includes second identifier information of the PINE and/or second PIN configuration data, the second request message is configured to request a first network device to recreate the policy data for the PIN, the policy data is configured to generate a policy of the PIN, and the second type of AF is located outside a trust domain of the first network device.

A sixth aspect of embodiments of the disclosure provides a method for processing information performed by a core network device, the method including:
receiving a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC);
creating first data for the PIN based on the first request message; and
sending a first response message, in which the first response message includes a creation result of the first data.

A seventh aspect of embodiments of the disclosure provides a method for processing information performed by a communication system, the method including:
receiving a first request message by a first network device, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC);
creating first data for the PIN by the first network device;
sending a first response message to a second network device, to a third network device or to a first type of application function by the first network device, in which the first response message includes first information, the first information is configured to indicate a creation result of the first data, and the first response message is forwarded or transparently transmitted by the third network device to a second type of application function (AF).

An eighth aspect of embodiments of the disclosure provides a method for processing information performed by a communication system, the method including:
receiving a first request message by a first network device, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC);
creating first data for the PIN by the first network device;
sending a first response message to a second network device, to a third network device or to a first type of application function by the first network device, in which the first response message includes first information, the first information is configured to indicate a creation result of the first data, and the first response message is forwarded or transparently transmitted by the third network device to a second type of application function (AF).

A ninth aspect of embodiments of the disclosure provides a first apparatus for processing information, the first apparatus further including:
a first receiving module, configured to receive a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC); and
a first creating module, configured to determine first data for the PIN based on the first identifier and the first configuration, in which the first data is data for generating a policy of the PIN.

A tenth aspect of embodiments of the disclosure provides a second apparatus for processing information, the second apparatus further including:
a second receiving module, configured to receive a third request message, in which the third request message includes a first identifier and a first configuration, the first identifier is configured to identify a personal internet of things network element (PINE), the first configuration is configured to configure a personal internet of things network (PIN), and the PINE includes a PINE with gateway capability (PEGC);
a second creating module, configured to create the PIN based on the third request message; and
a second sending module, configured to send a third response message based on a creation result of the PIN, in which the third response message includes second information, and the second information is configured to indicate a creation result of the PIN;
in which the second sending module is configured to send a first request message, in which the first request message includes a first identifier and a first configuration, the first identifier and the first configuration are used for creating first data, and the first data is data for generating a policy of the PIN.

An eleventh aspect of embodiments of the disclosure provides a third apparatus for processing information, the third apparatus further including:
a third receiving module, configured to receive a first response message, in which the first response message includes first information, and the first information is configured to indicate a creation result of first data for a personal internet of things network (PIN); and
a third sending module, configured to send the first response message.

A twelfth aspect of embodiments of the disclosure provides a fourth apparatus for processing information, the fourth apparatus including:
a fourth sending module, configured to send a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC); and
a fourth receiving module, configured to receive a first response message, in which the first response message includes first information, and the first information is a creation result of first data for the PIN;
in which the fourth sending module is configured to send a second request message, in which a creation of the first data fails, the second request message includes a second identifier and/or a second configuration, the second request message is configured to request a re-creation of the first data, and the first data is used for generating a policy of the PIN.

A thirteenth aspect of embodiments of the disclosure provides a fifth apparatus for processing information, the fifth apparatus including:
a fifth sending module, configured to send a first request message, in which the first request message includes a first identifier and a first configuration, the first identifier is configured to identify a personal internet of things network element (PINE), the first configuration is configured to configure a personal internet of things network (PIN), and the PINE includes a PINE with gateway capability (PEGC); and
a fifth receiving module, configured to receive a first response message, in which the first response message includes first information, and the first information is configured to indicate a creation result of first data for the PIN;
in which the fifth sending module is configured to send a second request message, in which a creation of the first data fails, the second request message includes a second identifier and/or a second configuration, the second request message is configured to request a first network device to recreate second data, policy data is configured to generate a policy of the PIN, and a second type of AF is located outside a trust domain of the first network device.

A fourteenth aspect of embodiments of the disclosure provides a communication system, the communication system including a first network device, and the communication system further including a second network device and/or a third network device;
in which the first network device is configured to receive a first request message, the first request message includes a first identifier and a first configuration, the first identifier is configured to identify a personal internet of things network element (PINE), the first configuration is configured to configure a personal internet of things network (PIN), and the PINE includes a PINE with gateway capability (PEGC); to determine first data for the PIN based on the first identifier and the first configuration, in which the first data is data for generating a policy for the PIN; and to send a first response message to the second network device or the third network device, in which the first response message includes first information, and the first information is configured to indicate a creation result of the first data; in which the first response message received by the second network device is sent to the third network device, and the first response message is sent by the third network device to a second type of application function (AF).

A fifteenth aspect of embodiment of the disclosure provides a communication device, including a processor, a transceiver, a memory, and an executable program stored in the memory and capable of being run by the processor, in which when the processor runs the executable program, the processor is configured to perform the method for processing information according to any technical aspect of the first to eighth aspects as mentioned above.

A sixteenth aspect of embodiments of the disclosure provides a computer storage medium having an executable program stored thereon, in which after the executable program is executed by a processor, the processor is configured to perform the method for processing information according to any technical aspect of the first to eighth aspects mentioned above.

In the embodiments of the disclosure, in a PIN creation procedure, at least one of a unified data management (UDM), a network exposure function (NEF) or an AF triggers a user data repository (UDR) to create the policy data. That is, in the PIN creation procedure, the creations of the PIN and of the policy data may be realized, such that the creations of the PIN and of the policy data do not need two separate procedures, thereby reducing the creation procedure, saving signaling overhead, and simplifying the creation operations of the AF, compared to creating the PIN and the policy data through two separate procedures.

The technical solutions according to the embodiments of the disclosure should be understood that the above general description and the following detailed description are merely illustrative and explanatory and cannot limit the embodiments of the disclosure.

### BRIEF DESCRIPTION OF THE DRAWINGS

The accompanying drawings, which are incorporated in and constitute a part of this specification, illustrate embodiments consistent with the disclosure and, together with the description, serve to explain the principles of the embodiments of the disclosure.
FIG. 1 is a schematic structural diagram illustrating a wireless communication system according to an example embodiment.
FIG. 2A is a schematic flowchart illustrating a method for processing information according to an example embodiment.
FIG. 2B is a schematic flowchart illustrating a method for processing information according to an example embodiment.
FIG. 3A is a schematic flowchart illustrating a method for processing information according to an example embodiment.
FIG. 3B is a schematic flowchart illustrating a method for processing information according to an example embodiment.
FIG. 3C is a schematic flowchart illustrating a method for processing information according to an example embodiment.
FIG. 4A is a schematic flowchart illustrating a method for processing information according to an example embodiment.
FIG. 4B is a schematic flowchart illustrating a method for processing information according to an example embodiment.
FIG. 4C is a schematic flowchart illustrating a method for processing information according to an example embodiment.
FIG. 4D is a schematic flowchart illustrating a method for processing information according to an example embodiment.
FIG. 4E is a schematic flowchart illustrating a method for processing information according to an example embodiment.
FIG. 5 is a schematic flowchart illustrating a method for processing information according to an example embodiment.
FIG. 6 is a schematic flowchart illustrating a method for processing information according to an example embodiment.
FIG. 7 is a schematic flowchart illustrating a method for processing information according to an example embodiment.
FIG. 8 is a schematic flowchart illustrating a method for processing information according to an example embodiment.
FIG. 9 is a schematic flowchart illustrating a method for processing information according to an example embodiment.
FIG. 10 is a schematic flowchart illustrating a method for processing information according to an example embodiment.
FIG. 11A is a schematic flowchart illustrating a method for processing information according to an example embodiment.
FIG. 11B is a schematic flowchart illustrating a method for processing information according to an example embodiment.
FIG. 11C is a schematic flowchart illustrating a method for processing information according to an example embodiment.
FIG. 12A is a schematic structural diagram illustrating a first apparatus for processing information according to an example embodiment.
FIG. 12B is a schematic structural diagram illustrating a second apparatus for processing information according to an example embodiment.
FIG. 12C is a schematic structural diagram illustrating a third apparatus for processing information according to an example embodiment.
FIG. 12D is a schematic structural diagram illustrating a fourth apparatus for processing information according to an example embodiment.
FIG. 12E is a schematic structural diagram illustrating a fifth apparatus for processing information according to an example embodiment.

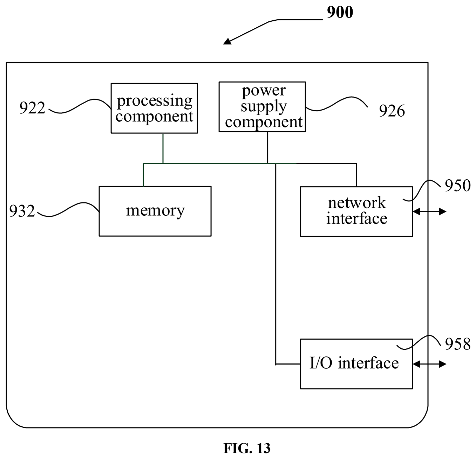

FIG. 13 is a schematic structural diagram illustrating a communication device according to an example embodiment.

### DETAILED DESCRIPTION

The embodiments herein provide methods for processing information. In some embodiments, the terms such as "method for processing personal internet of things network (PIN) data", "method for processing information" and "communication method" may be interchangeable, the terms such as "apparatus for processing PIN data", "apparatus for processing information" and "communication apparatus" may be interchangeable, and the terms such as "system for processing information" and "communication system" may be interchangeable.

The embodiments of the disclosure are not exhaustive, but are only illustrative of some embodiments, and are not intended to have specific limitations on the scope of protection of the disclosure. Without contradiction, each step in a certain embodiment may be implemented as an independent embodiment, and the steps may be arbitrarily combined. For example, a solution after removing some steps in a certain embodiment may also be implemented as an independent embodiment, and the order of the steps in a certain embodiment may be arbitrarily exchanged. In addition, the optional implementations in a certain embodiment may be arbitrarily combined. Furthermore, the embodiments may be arbitrarily combined. For example, some or all steps of different embodiments may be arbitrarily combined, and a certain embodiment may be arbitrarily combined with the optional implementations of other embodiments.

In each embodiment of the disclosure, unless otherwise specified or there is a logical conflict, the terms and/or descriptions between the embodiments are consistent and may be referenced to each other, and the technical features in different embodiments may be combined to form a new embodiment based on their internal logical relationships.

The terms used in the embodiments of the disclosure are only for the purpose of describing specific embodiments and are not intended to limit the disclosure.

In the embodiments of the disclosure, unless otherwise specified, elements expressed in the singular, such as "one", "a", "the", "the above", "the afore-mentioned", "the mentioned", "an" may mean one and only one, or may mean one or more, at least one, or the like. For example, when using articles such as "a", "an", "the" in English, the noun after the article may be understood as a singular expression or a plural expression.

In the embodiments of the disclosure, "a plurality of" refers to two or more.

In some embodiments, the terms "at least one of", "one or more", "a plurality of", "multiple", may be used interchangeably.

The phrase such as "at least one of A, B, C...", "A and/or B and/or C..." in the embodiments of the disclosure include a situation that any one of A, B, C... exists alone, and also include a situation of combination of any of A, B, C..., and each situation may exist alone. For example, "at least one of A, B, C" includes A exists alone, B exists alone, C exists alone, a combination of A and B, a combination of A and C, a combination of B and C, and a combination of A, B and C. For example, "A and/or B" includes A exists alone, B exists alone, and a combination of A and B.

In some embodiments, phrase such as "performing A in a case", "performing B in another case", "performing A in response to a case", "performing B in response to another case" may include performing A independently of B (that is, performing A in some embodiments); performing B independently of A (that is, performing B in some embodiments); performing A and B selectively (that is selectively performing A and B in some embodiments); performing both A and B (that is, performing A and B in some embodiments). When there are more branches such as A, B, C, etc., it is similar to the above.

The "first", "second", and other prefixes in the embodiments of the disclosure are only used for distinguishing different description objects, and do not constitute restrictions on the position, order, priority, quantity, or content of the described objects. For the described object, reference may be made to the description in the context of the claims or embodiments, and redundant restrictions due to the use of prefixes should not be constituted. For example, if the described object is a "field", the ordinal number before the "field" in "the first field" and "the second field" does not limit the position or order between the fields, and the "first" and "second" are not used to have a limitation on whether the fields modified by these terms are in the same message, nor are they used to have a limitation on the order of "the first field" and "the second field". As another example, if the described object is a "level", the ordinal number before the "level" in "the first level" and "the second level" does not limit the priority between the levels. As another example, the number of described objects is not limited by the ordinal number and may be one or more. Taking "the first device" as an example, the number of devices may be one or more. In addition, the objects modified by different prefixes may be the same or different. For example, if the described object is a "device", "the first device" and "the second device" may be the same device or different devices, and their types may be the same or different. As another example, if the described object is "information", "the first information" and "the second information" may be the same information or different information, and their contents may be the same or different.

In some embodiments, "including A", "containing A", "configured to indicate A", and "carrying A" may be interpreted as directly "carrying A" or "indirectly indicating A".

In some embodiments, terms such as "in response to", "in response to determining", "in a case where", "at", "when", "if" and so on may be used interchangeably.

In some embodiments, terms such as "greater than", "greater than or equal to", "not less than", "more than", "more than or equal to", "not smaller than", "higher than", "higher than or equal to", "not lower than", and "above" may be replaced with each other. Terms such as "smaller than", "smaller than or equal to", "not greater than", "less than", "less than or equal to", "not more than", "lower than", "lower than or equal to", "not higher than", and "below" may be replaced with each other.

In some embodiments, an apparatus may be interpreted as physical or virtual, and its name is not limited to the names mentioned in the embodiments, such as apparatus, equipment, device, circuit, network element, node, function, unit, section, system, network, chip, chip system, entity, and subject, which may be interchangeable.

In some embodiments, the following terms may be used interchangeably: access network device (AN device), radio access network device (RAN device), base station (BS), radio base station, fixed station, node, access point, transmission point (TP), reception point (RP), transmission/reception point (TRP), panel, antenna panel, antenna array, cell, macro cell, small cell, femto cell, pico cell, sector, cell group, carrier, component carrier, bandwidth part (BWP) and so on.

In some embodiments, the following terms may be used interchangeably: terminal, terminal device, user equipment (UE), user terminal, mobile station (MS), mobile terminal (MT), subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and so on.

In some embodiments, the access network device, the core network device, or the network device may be replaced by a terminal. For example, the communication between the access network device, the core network device or the network device and the terminal is replaced by a structure of the communication between multiple terminals (for example, also referred to as device-to-device (D2D), vehicle-to-everything (V2X), or the like), or may use various embodiments of the disclosure. In this case, it may also be set as a structure in which the terminal has all or part of the functions of the access network device. In addition, terms such as "uplink" and "downlink" may also be replaced by terms corresponding to the communication between terminals (for example, "side"). For example, "uplink channel", "downlink channel" or the like may be replaced by "side channel", and "uplink," "downlink" or the like may be replaced by "sidelink".

In some embodiments, the terminal may be replaced by an access network device, a core network device or a network device. In this case, the access network device, the core network device or the network device may also be configured to have a structure that has all or part of the functions of the terminal.

In some embodiments, the name of information is not limited to names mentioned in the embodiments. The following terms may be used interchangeably: information, message, signal, signaling, report, configuration, indication, instruction, command, channel, parameter, domain, field, symbol, code element/symbol, codebook, codeword, codepoint, bit, data, program, chip, and so on.

In some embodiments, terms such as "uplink" and "physical uplink" may be used interchangeably. Terms such as "downlink" and "physical downlink" may be used interchangeably. Terms such as "side", "sidelink", "side communication", "sidelink communication", "direct connection", "direct link", "direct communication" and "direct link communication" may be used interchangeably.

In some embodiments, terms such as "downlink control information (DCI)", "downlink (DL) assignment", "DL DCI", "uplink (UL) grant", and "UL DCI" may be used interchangeably.

In some embodiments, terms such as "physical downlink shared channel (PDSCH)" and "DL data" may be used interchangeably. Terms such as "physical uplink shared channel (PUSCH)" and "UL data" may be used interchangeably. In some embodiments, terms such as "radio", "wireless", "radio access network (RAN)", "access network (AN)", and "RAN-based" may be used interchangeably.

In some embodiments, terms such as "search space", "search space set", "search space configuration", "search space set configuration", "control resource set (CORESET)", and "CORESET configuration" may be used interchangeably.

In some embodiments, terms such as "synchronization signal (SS)", "synchronization signal block (SSB)", "reference signal (RS)", "pilot", and "pilot signal" may be used interchangeably.

In some embodiments, terms such as "moment", "time point", "time", and "time position" may be interchangeable. Terms such as "duration", "time period", "time window", "window", and "time" may be interchangeable.

In some embodiments, terms such as "component carrier (CC)", "cell", "frequency carrier", and "carrier frequency" may be used interchangeably.

In some embodiments, terms such as "resource block (RB)", "physical resource block (PRB)", "subcarrier group (SCG)", "resource element group (REG)", "PRB pair", "RB pair", "resource element (RE)" may be used interchangeably.

In some embodiments, terms such as "wireless access scheme" and "waveform" may be used interchangeably.

In some embodiments, terms such as "precoding", "precoder", "weight", "precoding weight", "quasi-co-location (QCL)", "transmission configuration indication (TCI) state", "spatial relation", "spatial domain filter", "transmission power", "phase rotation", "antenna port", "antenna port group", "layer", "the number of layers", "rank", "resource", "resource set", "resource group", "beam", "beam width", "beam angular degree", "antenna", "antenna element", "panel" may be used interchangeably.

In some embodiments, terms such as "frame", "radio frame", "subframe", "slot", "sub-slot", "mini-slot", "symbol", "symbol", "transmission time interval (TTI)" may be used interchangeably.

In some embodiments, terms "obtain", "acquire", "get", "receive", "transmit", "send" and/or "receive" may be interchangeable, which may be interpreted as receiving from other entities, obtaining from a protocol, obtaining by self-processing, autonomous implementation, etc.

In some embodiments, terms such as "sending", "reporting", "issuing", "transmitting", "sending" and/or "receiving" may be used interchangeably.

In some embodiments, "reservation" and "preset" may be interpreted as "pre-regulated" in a protocol or may be interpreted as a "preset action" performed by an apparatus.

In some embodiments, determining can be interpreted as, but is not limited by, estimating, deciding, judging, calculating, computing, processing, deriving, investigating, searching for, looking up, search, inquiry, ascertaining, receiving, transmitting, input, output, accessing, resolving, selecting, choosing, establishing, comparing, assuming, expecting, considering, broadcasting, notifying, communicating, forwarding, configuring, reconfiguring, allocating, mapping, assigning, or the like.

In some embodiments, the "judging" or "estimating" may be represented as, but is not limited to, a value (such as 0 or 1) of 1 bit, as a true value or a false value (Boolean value), or as a comparison of numerical values (for example, comparison with a predetermined value).

In some embodiments, the "network" may be interpreted as devices included in the network (e.g., access network device, core network device or the like).

In some embodiments, "not expecting to receive" may be interpreted as not receiving on time domain resources and/or frequency domain resources, or as not performing any subsequent processing on the data after receiving the data. "Not expecting to send" may be interpreted as not sending, or as sending but not expecting the recipient to respond to the sent content.

In some embodiments, the acquisition of data, information or the like may comply with the laws and regulations of the country where the data is obtained.

In some embodiments, data, information or the like may be obtained with the user's consent.

In addition, each element, each row or each column in the table of the embodiments of the disclosure may be implemented as an independent embodiment, and the combination of any elements, any rows or any columns may also be implemented as an independent embodiment.

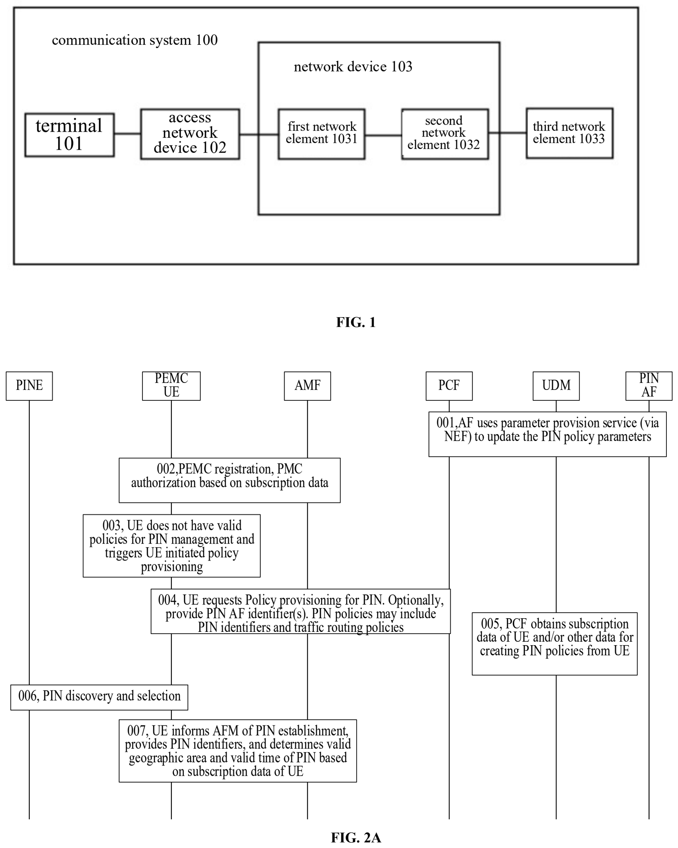

As illustrated in FIG. 1, a communication system 100 includes a terminal 101, an access network device 102, and a core network device 103.

In some embodiments, the terminal 101 includes, but is not limited to, for example, at least one of a mobile phone, a wearable device, an internet of things device, a vehicle with communication function, a smart vehicle, a tablet computer (Pad), a computer with wireless transceiver function, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, or a wireless terminal in smart home.

In some embodiments, the access network device 102 is, for example, a node or device that connects a terminal to a wireless network.

The access network device may include, but is not limited to, at least one of evolved NodeB (eNB), next generation evolved NodeB (ng-eNB), next generation NodeB (gNB), node B (NB), home node B (HNB), home evolved nodeB (HeNB), wireless backhaul device, radio network controller (RNC), base station controller (BSC), base transceiver station (BTS), base band unit (BBU), mobile switching center, base station in 6G communication system, open random access network (Open RAN), cloud RAN, base station in other communication systems, or access node in wireless fidelity (WiFi) system.

In some embodiments, the technical solution of the disclosure may be applicable to the Open RAN architecture. In this case, the interfaces between or within the access network devices involved in the embodiments of the disclosure may become internal interfaces of the Open RAN, and the processes and information interactions between these internal interfaces may be implemented through software or programs.

In some embodiments, the access network device may be composed of a central unit (CU) and distributed units (DU). The CU may also be referred to as a control unit. The CU-DU structure may be used to split the protocol layer of the access network device, with some functions of the protocol layer being centrally controlled by the CU, and the remaining part or all of the functions of the protocol layer being distributed in the DUs, and the DUs are centrally controlled by the CU. The disclosure is not limited to the above.

In some embodiments, the core network device 103 may be a device including a first network element 1031, a second network element 1032 or the like, or may be a plurality of devices or a device group including all or some of the first network element 1031, the second network element 1032 or the like. The network element may be virtual or physical. The core network may include, for example, at least one of an Evolved Packet Core (EPC), a 5G Core Network (5GCN), or a Next Generation Core (NGC).

It may be understood that the communication system described in the embodiments of the disclosure is for the purpose of more clearly illustrating the technical solutions of the embodiments of the disclosure, and does not constitute a limitation on the technical solutions of the embodiments of the disclosure. A person skilled in the art may know that with the evolution of the system architecture and the emergence of new business scenarios, the technical solutions of the embodiments of the disclosure are also applicable to similar technical problems.

The following embodiments of the disclosure may be applied to the communication system 100 illustrated in FIG. 1 or part of the subject, but the disclosure are not limited to the above. The subjects illustrated in FIG. 1 are examples, and the communication system may include all or some of the subjects in FIG. 1 or may include other subjects other than FIG. 1. The number and form of the subjects are arbitrary, and the connection relationship between the subjects is an example. For example, the subjects may be connected or disconnected, and the connection may be in any manner, which may be a direct connection or an indirect connection and may be a wired connection or a wireless connection.

The embodiments of the disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM^{™}), CDMA2000, Ultra Mobile Broadband (UMB), IEEE 802.11 (Wi-Fi^{™}), IEEE 802.16 (WiMAX^{™}) IEEE 802.20, Ultra-WideBand (UWB), Bluetooth^{™}, Public Land Mobile Network (PLMN) network, Device-to-Device (D2D) system, Machine-to-Machine (M2M) system, Internet of Things (IoT) system, Vehicle-to-Everything (V2X), systems using other communication methods, and next-generation systems based on them. In addition, multiple systems may also be combined (for example, a combination of LTE or LTE-A and 5G, etc.) for application.

The first network element 1031 and the second network element 1032 involved in the core network device 103 illustrated in FIG. 1 may be different network devices and may correspond to a unified data management (UDM), a user data repository (UDR) and/or a policy control function (PCF) of the core network device.

The third network element 1033 may be a network device located outside a core network and may include, but is not limited to, various application functions (AFs).

For example, the personal internet of things network (PIN) may be an internet of things network established by the UE for a (PMEC), and connected to the communication system 100 illustrated in FIG. 1 via a personal internet of things network element with management capability (PEMC).

PIN management involves determining a type of a personal internet of things network element (PINE) and configuring a PIN. A network operator and a third party may each authorize the creation of the PIN and the management of the PIN. After the PIN has been created, the personal internet of things network with gateway capability (PEGC) may be added into or removed from the PIN, and a normal PINE may be associated with PEGCs or removed from the PIN.

FIG. 2A illustrates a method for managing a PIN by an AF according to the disclosure. The method includes the following.

At 001, PIN AF uses parameter configuration services to provide PIN policies. PIN policies may include PIN ID policies, privacy policies and/or routing policies. For example, the PIN AF sends data required for updating policy parameters to the UDM, the UDM stores the data and sends stored information related to the creation of the PIN policies to the PCF when the PCF creates the PIN policies. The PCF generates the policy parameters based on the information received from the UMD. At 002, a UE that may act as a PEMC is registered in the network. AMF may authorize the UE to act as the PEGC in a registration procedure.

At 003, if the UE does not have valid policies for the PIN management, the UE is triggered to initiate policy initialization. The "policy initialization" here may be understood as policy creation.

At 004, the UE requests PIN policies to the PCF. For example, the UE may request the PIN policies through PIN AF identifiers.

At 005, the PCF fetches UE's subscription data and/or other data required for generating the policies from the UDM. For example, the PIN policies are obtained based on the UE's subscription data. The PIN policies may include policies for assigning PIN ID, privacy policies, and traffic routing policies. The policies for assigning PIN ID here may be policies that the UDM assigns a first PIN ID to the PIN. For example, the PIN policies are policies for the PIN.

The PIN policies may also include a creation indicator to inform the fifth generation core (5GC) about PIN creation. The PCF may deliver the PIN policies to the UE using the UE Configuration Information Update procedure.

At 006, the PINE performs selection discovery and selection of the PIN, and finally the PINE is added to the PIN.

At 007, the UE informs PIN creation to the AMF, provides the PIN identifier, and determines valid geographical area and valid time of the PIN based on UE's subscription data. The AMF may provide time and geographical area-related policies at this stage.

It may be seen in FIG. 2A that the AF triggers the PCF to configure policies for the PIN through a dedicated procedure. That is, this procedure only covers the policy creation procedure.

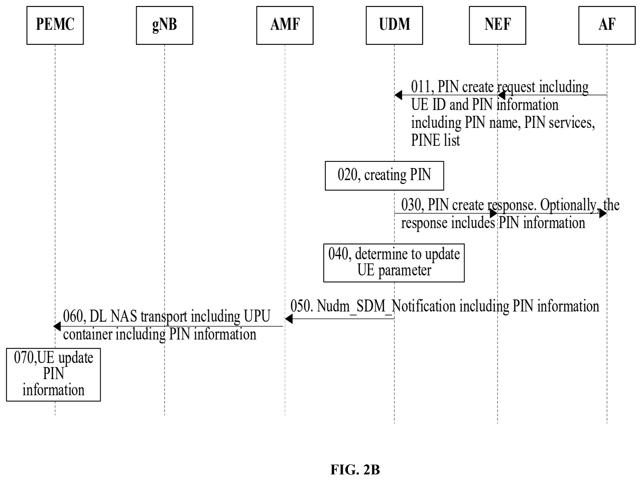

FIG. 2B illustrates a method for managing a PIN by an AF. The method includes the following.

At 010, the AF requests to create a new PIN network to UDM via NEF. A request message sent to the UDM may include PIN information and PINE information.

The PIN information may involve one or more of: PIN ID, PIN name, PIN service(s), PIN valid time, and a list of PINE information.

The PINE information may include PINE ID, PINE name, PINE type, PINE capability information, service(s) supported by the PIN, service(s) not supported by the PIN, and valid time of the PIN.

One PIN may at least include one or more PEMCs. And one PIN may also include one or more PINEs.

At 020, the UDM creates a PIN network based on the request from the AF and establishes PIN profile. For example, the PIN profile is established based on the UE's subscription data and/or the PIN information received from the AF. Certainly, PIN parameters in the PIN profile may also be generated by the UDM. For example, the PIN parameters generated by the UDM may include internal PIN ID.

At 030, the UDM sends a PIN creation response to the AF via the NEF. The PIN creation response may include a creation result. If a PIN is created, the response message may also include PIN information and/or PIN parameters generated by the UDM.

At 040, the UDM determines to trigger the UE Parameters Update (UPU) procedure to provision the PIN information to the PEMC.

At 050, the UDM invokes Nudm_SDM_Notification. The Nudm_SDM_Notification includes PIN information.

At 060, the UDM provides the PIN information to the gNB via the AMF.

At 070, the PEMC updates the PIN information locally based on the parameters received from the UDM.

It may be seen that the method illustrated in FIG. 2B only covers the PIN creation procedure. In a case where the PIN policies need to be involved, an external procedure is required for processing.

In view of the above, embodiments of the disclosure further provide methods for processing information, which may create the PIN and create policy data related to the PIN policies in one procedure.

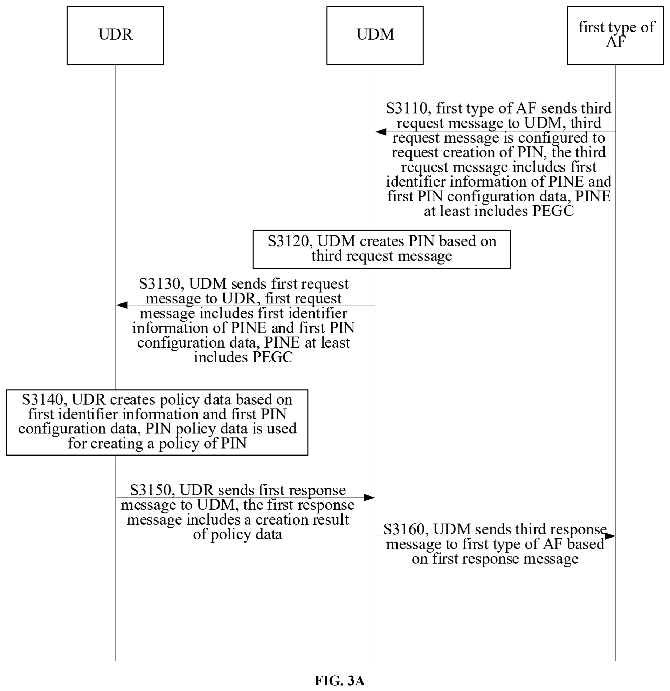

As illustrated in FIG. 3A, embodiments of the disclosure provide a method for processing information performed by a wireless communication system. The method may include the following.

At S3110, a first type of AF sends a third request message to a UDM. The third request message is configured to request a creation of a PIN. The third request message includes first identifier information of a PINE and first PIN configuration data. The PINE at least includes a PEGC.

At S3120, the UDM creates the PIN based on the third request message.

At S3130, the UDM sends a first request message to a UDR. The first request message includes the first identifier information of the PINE and the first PIN configuration data. The PINE at least includes the PEGC.

At S3140, the UDR creates policy data based on the first identifier information and the first PIN configuration data. The policy data is configured to generate a policy of the PIN.

At S3150, the UDR sends a first response message to the UDM. The first response message includes a creation result of the policy data.

At S3160, the UDM sends a third response message to the first type of AF based on the first response message.

For example, the first type of AF is a kind of AF, and the AF may be used for controlling one or more kinds of services and/or providing service data.

For example, the first type of AF may be an AF located in a core network. Such a first type of AF is located in the same trust domain as the UDM and/or UDR. That is, the first type of AF may be an AF trusted by the UDM and/or the UDR.

For example, the first type of AF may be an AF deployed by a communication operator. Such an AF and the UDM and/or UDR in the core network may belong to the same communication operator or may belong to communication operators with whom they have established cooperative relationships.

One PIN at least includes one PEGC, such that the first identifier information of the PINE carried in the third request message at least includes first identifier information of the PEGC.

In some embodiments, the PINE indicated by the first identifier information carried in the third request message may also include a PEMC and/or a normal PINE. The normal PINE may be a PINE other than the PEGC and the PEMC.

For example, the first identifier information may be referred to as the first identifier for short. The first PIN configuration data may be referred to as the first configuration for short.

The "policy data" here may be a kind of first data.

The first response includes first information. The first information may include one or more bits for indicating the creation result of the first data, that is, indicating the creation result of the policy data. The creation result may include: a failure result and a success result.

In the embodiments of the disclosure, the first type of AF may invoke a Nudm interface-based parameter provision creation request (Nudm_ParameterProvision_Create request) message or a Nudm interface-based parameter provision update request (Nudm_ParameterProvision_Update request) to create the PIN. Certainly, the parameter provision creation request here is only an example of the third request message mentioned above, and the disclosure is not limited to this example in specific implementation. The third request message may be any message that may be transmitted between the first type of AF and the UDM.

Correspondingly, the third response message may be: a Nudm interface-based parameter provision creation response (Nudm_ParameterProvision_Create response) message or a Nudm interface-based parameter provision update response (Nudm_ParameterProvision_Update response) message.

The third response message may include second information, and the second information is configured to indicate a creation result of the PIN. The creation result of the PIN may include: a result that creating the PIN fails and a result that creating the PIN is successful.

The first identifier information may include any information that may uniquely identify the PINE.

For example, the first identifier information may include, but is not limited to, a Generic Public Subscription Identifier (GPSI). In other embodiments, the first identifier information may also be other information that may uniquely identify a device, such as a physical address (such as a Media Access Control (MAC) address) of a communication device, or other communication identifiers bound to the GPSI. Other communication identifiers bound to the GPSI may include an instant messaging identifier and/or an email address. The instant messaging identifier may include a communication identifier of an instant messaging application such as WeChat, Weibo, QQ, or Facebook.

The first PIN configuration data may include various configuration data related to PIN creation, PIN-based communication, PINE management within the PIN, and PIN removal.

For example, the first PIN configuration data may include policy data, including data related to routing rules, data related to Quality of Service (QoS) parameters and/or data related to PIN charging.

The PIN subscription data may be various data generated in subscribing to a PIN. The subscription data may include, but is not limited to, at least one of: mobility subscription data for mobility management of the PIN, or session subscription data for PIN-based session management.

In some embodiments, the mobility subscription data may be used for determining whether a PIN is allowed to move across areas. For example, the mobility subscription data may be used for determining whether the PIN created based on a user's mobile phone remains valid after it follows the mobile phone to migrate from one tracking area (TA) to another TA. Here, the tracking area is merely an example of the "area" in the above-mentioned "move across areas". In a specific implementation, the above-mentioned "move across areas" may also involve public land mobile networks (PLMN). For example, when the PEGC of the PIN moves to a roaming area, it is determined whether the PIN is still valid, or it is used for the charging control of the PIN-based communication. In some embodiments, the "area" in the above-mentioned "move across areas" may also include a specific area determined based on the first PIN configuration data. For example, the specific area may include one or more cells.

In some embodiments, the session subscription data may be used for determining a session type or session parameters that are usable by the PIN service subscribed by the PIN. For example, the session subscription data may be used for determining whether the PINE may initiate a group session based on the PIN. As another example, the session subscription data may be used for determining whether a session initiated by a PINE in the PIN based on the PIN may use a network slice or determining a network slice that may be used.

In some embodiments, the first PIN configuration data may further include time information for indicating the valid time of requesting to create a PIN; area information for indicating a valid area of requesting to create a PIN; and PIN service information for indicating the PIN services allowing PIN-based communication.

Within the valid time, the PINE in the PIN may initiate the communication based on the PIN. Within the valid area, the PINE in the PIN may initiate communication based on the PIN.

The PINE in the PIN may use the PIN to communicate the subscribed PIN services.

Certainly, the above are all examples for explaining the first PIN configuration data, and the specific implementation is not limited to this example.

The UDM may be configured to create a PIN. The UDR is configured to create policy data for the PIN.

Creating a PIN by the UDM may include storing the subscription data of the PIN and/or assigning a first PIN identifier to the PIN.

In some embodiments, after the PIN has been created, the UDM sends the first request message to the UDR. Or after the PIN has been created, the UDM triggers the NEF or the AF through a third response message to send the first request message to the UDR.

In other embodiments, the UDM, the NEF or the AF may send the first request message to the UDR during the PIN creation procedure, such that the UDR may receive the first request message during the PIN creation procedure. At this time, that is, during the procedure of creating the PIN by the UDM, the UDR may synchronously create the policy data.

For example, the first request message may further include a first PIN identifier. The first PIN identifier may be an identifier assigned by the UDM during the procedure of creating the PIN or after the PIN has been created.

After receiving the third request message, the UDM may determine whether to create the PIN requested to be created by the first type of AF or the second type of AF.

The UDM may determine whether to create a PIN based on the subscription services from the AF and/or the first PIN configuration data involved in the third request message.

In the case of determining to create the PIN, the UDM will generate and save the subscription data of the PIN and/or assign a first PIN identifier to the PIN. The first PIN identifier is also an internal PIN identifier.

The first PIN configuration data may include PIN subscription data and session subscription data.

For example, the UDM may determine whether the first type of AF has an authority to create the PIN, based on the first PIN configuration data. In a case where the AF has an authority to create the PIN, the UDM creates the PIN and generates PIN configuration information based on the first PIN configuration data. The PIN configuration information may include the first identifier information of the PEGC of the PIN and the PIN configuration obtained based on the first PIN configuration data. The PIN configuration information may be stored in the UDM in the form of a PIN configuration file.

For example, a certain AF only supports the PIN creation for service A, but the UDM determines, based on the first PIN configuration data, that the PIN requested to be created by the first type of AF is for the communication of service B. Obviously, in this case, it may be considered that the first type of AF does not have the authority to create the PIN, and the UDM may refuse to create the PIN.

As another example, it is determined, based on the UE's subscription data represented by the first identifier information of the PEGC, whether to allow the UE to act as the PEGC to create a PIN. In a case where the UE's subscription data indicates that it does not allow the UE to act as the PEGC, the UDM will refuse to create the PIN, that is, the creation of the PIN fails. In a case where the UE's subscription data indicates that it allows the UE to act as the PEGC, the UDM will create the PIN. In some embodiments, the UE's subscription data may also be used for determining which device is allowed to join as a PINE based on the PIN created by the UE. In a case where at least one of devices indicated by the first identifier information carried by the third request message is not included in devices allowed to join the PIN that are indicated by the UE's subscription data, the UDM may also refuse to create the PIN.

For example, the third request message may include a creation indicator. The creation indicator is used by the AF to request the creation of a PIN.

The above is only an example of creating a PIN by the UDM, and the specific implementation is not limited to this example.

In some embodiments, in the case where the creation of the PIN by the UDM fails, the UDM may directly send a third response message for indicating that the creation of the PIN fails to the first type of AF, to inform the first type of AF of the creation failure of the PIN.

In some embodiments, in creating the PIN, the UDM will also assign a first PIN identifier to the PIN. The first PIN identifier is an identifier that may be identified by any network device in the wireless communication system. The first PIN identifier may also be called an internal PIN identifier.

The first PIN identifier is recorded in the PIN configuration information generated by the UDM. The first PIN identifier may be used by the PINE in the PIN for communicating using the wireless communication system based on the first PIN identifier.

In some embodiments, the first type of AF may also assign a second PIN identifier to the PIN that is requested to create by the first type of AF. The second PIN identifier may be a second PIN identifier that may be identified by clients related to the services of the first type of AF. In a case where the second type of AF has an assigned second PIN identifier, the third request message may also carry the second PIN identifier. In this way, in creating the PIN by the UDM, the DUM will also store the second PIN identifier to the PIN configuration information. The subsequent PINE device may initiate PIN-based communication (also known as PIN communication) based on the second PIN identifier, and after receiving this communication request, the wireless communication network device may convert the second PIN identifier into the first PIN identifier based on the PIN configuration data stored by the UDM to provide PIN communication services to the PINE.

After the UDM successfully creates the PIN, the UDM may directly inform the UDR to create the policy data. At this time, the UDM may directly send the first request message to the UDR, and the first request message at least includes the first identifier information of the PEGC and all or part of the first PIN configuration data. For example, the UDM may send the first PIN configuration data related to the policy data included in the third request message to the UDM. For example, the first PIN configuration data related to routing rules, QoS parameters and/or charging is sent to the UDM.

In some embodiments, since the UDM successfully creates the PIN, the first PIN identifier is assigned to the PIN, and the first request message may also include the first PIN identifier of the PIN.

In some other embodiments, the UDM sends the first request message to the UDR during the procedure of creating the PIN to create policy data for the PIN that is being generated. In a case where the PIN creation fails, the UDR deletes the policy data after learning from the UDM that the PIN creation fails.

For example, the UDM may invoke a Nudr interface-based data management creation request (Nudr_DM_Create request) message or a Nudr interface-based data management update request (Nudr_DM_Update request) message to request the UDM to create the policy data for the PIN.

Certainly, the parameter provision creation request here is only an example of the "first request message" mentioned above, and the specific implementation is not limited to this example. The first request message may be any message that may be transmitted between the UDM and the UDR.

Correspondingly, the first response message may be a Nudr interface-based data management creation response (Nudr_DM_Create response) message or a Nudr interface-based data management update response (Nudr_DM_Update response) message.

The policy data is usable by the PCF to generate PIN policies. The PIN policies may be used for controlling the PIN communication.

The PIN policies may include at least one of: routing policies (i.e., routing rules) or Quality of Service (QoS) parameters.

In conclusion, the PIN policies may include Policy and Charging Control (PCC) rules related to the PIN-based communication.

The policy data may include policy control data. The policy control data may be used for controlling the PIN policies of the PCF.

For example, the policy control data may indicate a bandwidth usage range of the PIN, and the PCF may generate the PIN policies based on the bandwidth usage range.

As another example, the policy control data may indicate a value range of a QoS parameter, and the PCF may generate the PIN policies based on the policy control data.

For example, in creating the policy data, the UDR needs to verify whether each PINE is a legitimate device or may be registered to the device based on the first identifier information, or the UDR needs to verify whether the first PIN configuration information is consistent with the subscription data of the UE acting as the PEGC. In conclusion, in creating the policy data, the UDR may verify whether to create the policy data. In a case where the verification passes, the policy data is created; otherwise it is determined that the creation of the policy data fails.

The creation result of the policy data may include creation success and creation failure.

If the creation is successful, the UDR will correspondingly store the first identifier information, the first PIN identifier, and the policy data.

If the creation fails, the UDR will not store the first identifier information, the first PIN and the policy data, or the UDR will generate a creation failure record. The creation failure record may have stored first identifier information and stored first PIN configuration data. In addition, the creation failure record may also have stored failure reasons.

The creation result of the policy data may be carried in the first response message and returned to the UDM, and the UDM returns the third response message to the first type of AF, thereby informing the first type of AF that the PIN creation fails.

For example, the third response message may indicate the creation result of the PIN and the creation result of the policy data. In this way, the first type of AF may know the respective creation results of the PIN and the policy data based on the first response message.

For example, the third response message may include result information. The result information indicating success means that both the PIN and the policy data are successfully created. Or the result information indicating failure means that the creation of at least one of the PIN and/or the policy data fails.

If the PIN is created successfully, the third response message may further include a first PIN identifier of the PIN.

If the policy data is created successfully, the PCF may subsequently obtain the policy data from the UDR to create the PIN policies.

For example, after the PIN and the policy data are successfully created, the PINE may initiate the PIN communication. When receiving the PIN communication, the PCF may request the policy data from the UDR using the first PIN identifier carried in the PIN communication and create the PIN policies.

As another example, after the PIN and the policy data are successfully created, when the PEGC of the PIN is registered to the network, the PCF may obtain the first identifier information of the PEGC based on a registration request from the PEGC and obtain the policy data from the UDR based on the first identifier information to create the PIN policies.

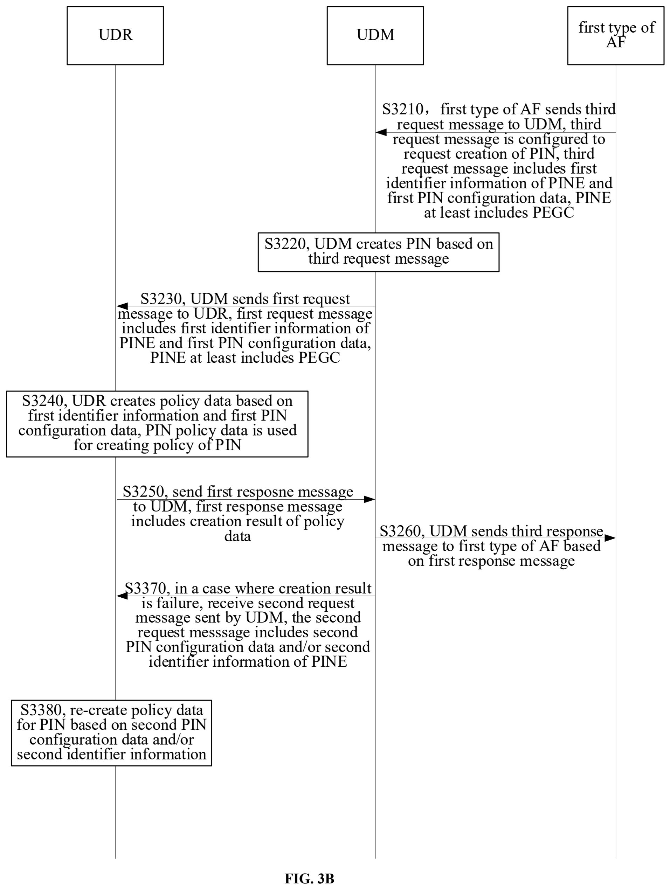

In some embodiments of the disclosure, in a case where the creation of the policy data fails or the policy data cannot be created, the first response message sent by the UDR to the UDM carries a failure identifier. After receiving the first response message, the UDM recreates the PIN, that is the S3120 is executed again. Or after receiving the first response message, the UDM sends the third response message to the first type of AF, and the first type of AF executes the S3110 again after receiving the third response message for indicating the creation failure. After determining that the creation of the policy data fails or the policy data cannot be created, the PCF sends a notification to the UDR, such that the UDR determines that the creation of the policy data fails or the policy data cannot be created. In this case, the UDR sends a trigger notification to the AF via the NEF or directly sends the trigger notification to the AF, such that the AF provides information for updating the policy data in the UDR. For the relevant content, reference may be made to the description corresponding to FIG. 3B below, which will not be repeated here.

It is noteworthy that the S3120 and the S3130 may be executed simultaneously, the S3120 may be executed before the S3130, or the S3130 may be executed before the S3120.

In conclusion, in embodiments of the disclosure, in the PIN creation procedure, at least one of the UDM, the NEF or the AF will trigger the UDR to create the policy data. That is, in the PIN creation procedure, both the creation of the PIN and the creation of the policy data may be realized, so that the creation of the PIN and the creation of policy data do not need two separate procedures, thereby reducing the creation procedure, saving signaling overhead, and simplifying the creation operations of the AF, compared to creating the PIN and the policy data through two separate procedures.

As illustrated in FIG. 3B, embodiments of the disclosure provide a method for processing information performed by a wireless communication system. The method may include the following.

At S3210, the first type of AF sends a third request message to the UDM. The third request message is configured to request a creation of a PIN. The third request message includes first identifier information of a PINE and first PIN configuration data. The PINE at least includes a PEGC.

At S3220, the UDM creates the PIN based on the third request message.

At S3230, the UDM sends a first request message to UDR. The first request message includes the first identifier information of the PINE and the first PIN configuration data. The PINE at least includes the PEGC.

At S3240, the UDR creates policy data based on the first identifier information and the first PIN configuration data. The policy data is used for generating PIN policies.

At S3250, a first response message is sent to the UDM. The first response message includes a creation result of the policy data.

At S3260, the UDM sends a third response message to a first type of AF based on the first response message.

At S3370, in a case that the creation result is failure, a second request message sent by the UDM is received. The second request message includes second PIN configuration data and/or second identifier information of the PINE.

At S3380, policy data is recreated for the PIN based on the second PIN configuration data and/or the second identifier information.

It is noteworthy that the S3220 and the S3230 may be executed simultaneously, the S3220 may be executed before the S3230, or the S3230 may be executed before the S3220.

In the embodiments of the disclosure, in a case where the creation of the PIN is successful but the creation of the policy data fails, the UDM will re-acquire the PIN configuration data and/or identifier information from the first type of AF, the re-acquired identifier information is referred to as the second identifier information, and the re-acquired PIN configuration data is referred to as the second PIN configuration data. The second identifier information here may be referred to as the second identifier for short and the second PIN configuration data may be referred to as the PIN for short.

The reason why the creation of the policy data fails may be that one or both of the first identifier information and the first PIN configuration data are incorrect. The second request message may carry the second identifier information and/or the second PIN configuration data after the update, such that the UDR may recreate the policy data for the created PIN, based on the second identifier information and/or second PIN configuration data carried in the second request message.

The descriptions related to the second identifier information and the second PIN configuration data are the same as or similar to those of the first identifier information and the first PIN configuration data in afore-mentioned embodiments, which are not repeated here.

In this way, the UDR may re-create the policy data for the PIN based on the re-acquired second PIN configuration data and/or second identifier information until the creation is successful.

In the embodiments, for the step of creating the PIN by the UDM and the step of creating the policy data by the UDR, reference may be made to the embodiments illustrated in FIG. 3A, which will not be repeated here.

For example, the second request message may include, but is not limited to, a Nudr interface-based parameter provision update request data management update request (Nudr_DM_Update request) message. In some embodiments, the second request message may also include an update indicator for distinguishing between the creation and the update of the policy data. For example, the update indicator may also be referred to as a recreation indicator or a retransmission indicator.

In a case where the UDM returns a second response message based on the second request message, the second response message may include: a Nudr interface-based data management update response (Nudr_DM_Update response) message.

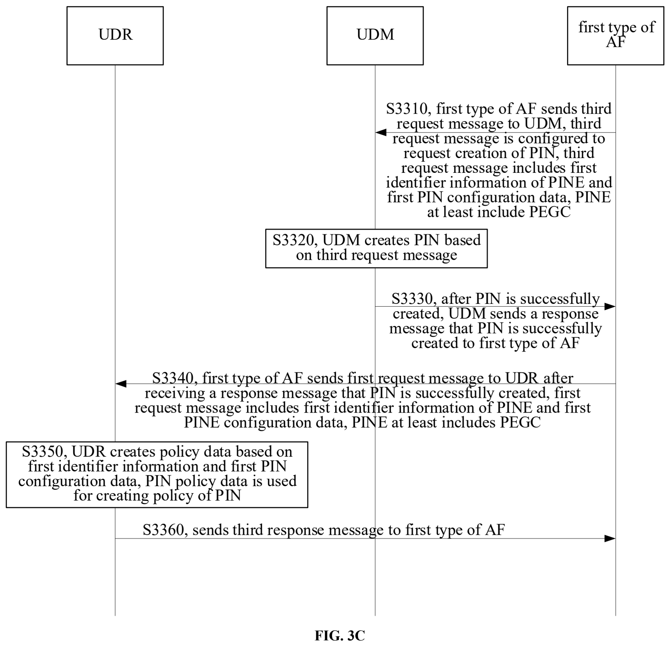

As illustrated in FIG. 3C, embodiments of the disclosure provide a method for processing information performed by a wireless communication system. The method may include the following.

At S3310, a first type of AF sends a third request message to the UDM. The third request message is configured to request a creation of a PIN. The third request message includes first identifier information of a PINE and first PIN configuration data. The PINE at least includes a PEGC.

At S3320, a UDM creates the PIN based on the third request message.

At S3330, the UDM sends a response message that the creation of the PIN is successful to the first type of AF.

At S3340, after receiving the response message that the creation of the PIN is successful, the first type of AF sends a first request message to the UDR. The first request message includes the first identifier information of the PINE and the first PIN configuration data. The PINE at least includes the PEGC.

At S3350, the UDR creates the policy data based on the first identifier information and the first PIN configuration data. The policy data is used for generating PIN policies.

At S3360, a third response message is sent to the first type of AF.

In the embodiments of the disclosure, after the UDM successfully creates the PIN, the UDM directly notifies the first type of AF of this, such that the first type of AF continues to create the policy data in the procedure. In this case, the first type of AF directly sends the first request message to the UDR and directly receives the first response message from the UDR.

In one embodiment, in the case that the creation of the PIN is successful and the creation of the policy data fails, the first type of AF may directly send a second request message to the UDR. The second request message includes second PIN configuration data and/or second identifier information of the PINE.

The policy data is recreated for the PIN based on the second PIN configuration data and/or the second identifier information.

In another embodiment, in the case that the creation of the PIN is successful and the creation of the policy data fails, the first type of AF provides the UDM with the second PIN configuration data and/or the second identifier information of the PINE.

The UDM receives the second PIN configuration data and/or the second identifier information of the PINE provided by the first type of AF and updates the locally stored PIN configuration information based on the second PIN configuration data and/or the second identifier information of the PINE.

For example, in some embodiments of the disclosure, after receiving the second PIN configuration data and/or the second identifier information of the PINE, the UDM sends the second request message to the UDR. The second request message includes the second PIN configuration data and/or the second identifier information of the PINE.

For example, in some embodiments of the disclosure, the policy data is recreated for the PIN based on the second PIN configuration data and/or the second identifier information.

For example, in some embodiments of the disclosure, in the S3360, the UDR may not send the third response message to the AF, instead, the UDR may send the third response message to the UDM. Then, in executing the S3330, the UDM may add the content of the third response message to the response message that the creation of the PIN is successful. In this embodiment, the S3340 and the S3350 are executed before the S3330.

In conclusion, the embodiments of the disclosure provide a method for requesting the UDM to create the PIN and requesting the UDR to create the policy data by the first type of TA through one procedure and provide a method for recreating the policy data when the creation of the policy data fails, thereby having the characteristics of simple implementation and low signaling overhead.

It is noteworthy that the S3320 and the S3330 may be executed simultaneously, the S3320 may be executed before the S3330, or the S3330 may be executed before the S3320.

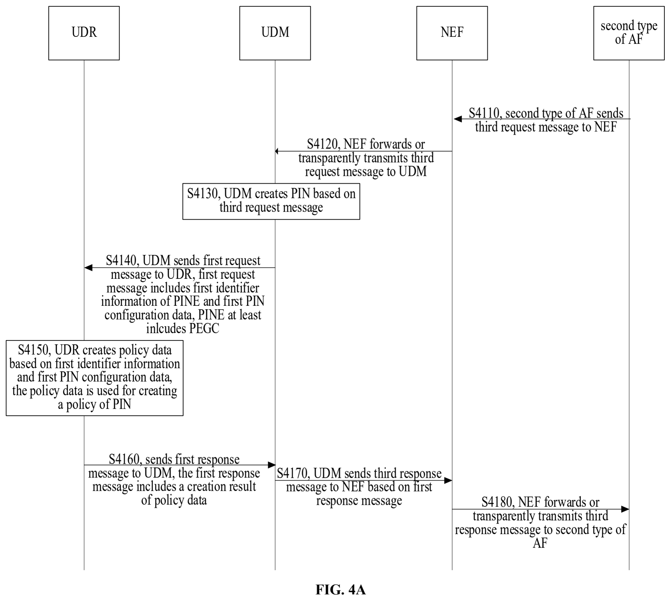

As illustrated in FIG. 4A, embodiments of the disclosure provide a method for processing information performed by a wireless communication system. The method may include the following.

At S41 10, a second type of AF sends a third request message to an NEF. The third request message is configured to request a creation of a PIN. The third request message includes first identifier information of a PINE and first PIN configuration data. The PINE at least includes a PEGC.

At S4120, the NEF forwards or transparently transmits the third request message to a UDM.

At S4130, the UDM creates the PIN based on the third request message.

At S4140, the UDM sends a first request message to a UDR. The first request message includes the first identifier information of the PINE and the first PIN configuration data. The PINE at least includes a PEGC.

At S4150, the UDR creates policy data based on the first identifier information and the first PIN configuration data. The policy data is used for generating PIN policies.

At S4160, a first response message is sent to the UDM. The first response message includes a creation result of the policy data.

At S4170, the UDM sends a third response message to the NEF based on the first response message.

At S4180, the NEF forwards or transparently transmits the third response message to the second type of AF.

The second type of AF may be an AF located outside a trust domain where the UDM and/or UDR is located, or the second type of AF is not an AF trusted by the UDM and/or the UDR. The second type of AF may be an AF deployed by a third party. The trust domain where the UDM and/or UDR is located may be the core network (CN).

This type of AF needs to be connected to the core network of the wireless communication system via the NEF. After receiving the first request message, the NEF will perform security filtering and other processing on the first request message. In a case that it is determined that the first request message is secure, the first request message may be forwarded or transparently transmitted to the UDM. The UDM will create the PIN and further the UDR will create the policy data.

For the contents of the first request message, the third request message, the first response message and the third response message, reference may be made to the context of the same in the embodiments illustrated in FIG. 3A, and for the step of creating PIN by the UDM and the step of creating the policy data by the UDR, reference may be made to the context of the same in the embodiments illustrated in FIG. 3A.

For example, in embodiments of the disclosure, the third request message is first provided by the second type of AF to the NEF. In this case, the third request message may be a Nnef interface-based parameter provision creation request (Nnef_ParameterProvision_Create request) message or a Nnef interface-based parameter provision creation update (Nnef_ParameterProvision _Create request) message for requesting the creation of a PIN.

The third request message may include a creation indicator consisting of one or more bits.

As another example, after the NEF receives the third request message from the second type of AF, the NEF forwards the message content received from the second type of AF to the UDM through a Nudm interface-based parameter provision creation request (Nudm_ParameterProvision_Create request) message or a Nudm interface-based parameter provision creation update (Nudm_ParameterProvision_Create request) message, to request the UDM to create a PIN and assign a first PIN identifier to the successfully created PIN (i.e., assign an internal PIN identifier to the PIN).

Correspondingly, the NEF may invoke the Nnef interface-based parameter provision creation response (Nnef_ParameterProvision_Create response) message or the Nnef interface-based parameter provision creation update response (Nnef_ParameterProvision_Create reqsponse) message to interact with the second type of AF. For example, the NEF will invoke these two messages to forward or transparently transmit the third response message from the UDM.

It is noteworthy that the S4120 and the S4130 may be executed simultaneously, the S4120 may be executed before the S4130, or the S4130 may be executed before the S4120.

In the embodiments of the disclosure, since the second type of AF is located outside the CN, it communicates with the UDM and UDR respectively via the NEF. The first type of AF and the second type of AF are both AFs. That is, the AFs may communicate with the UDM and UDR via the NEF or not via the NEF.

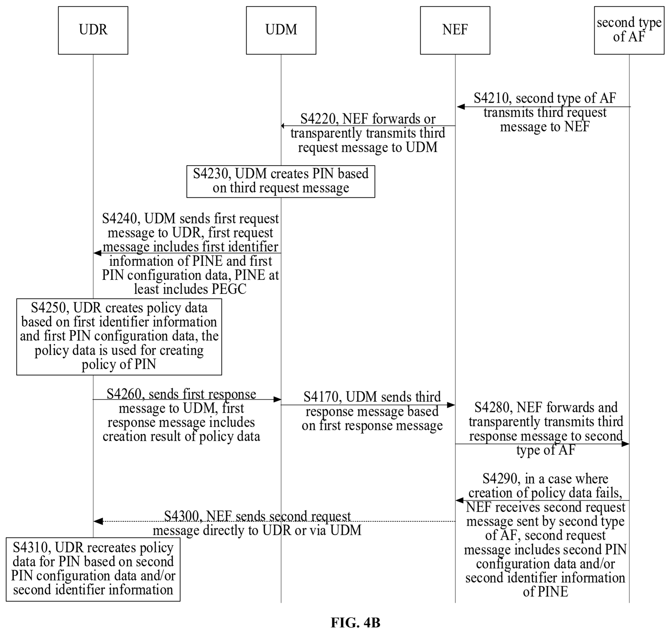

As illustrated in FIG. 4B, embodiments of the disclosure provide a method for processing information performed by a wireless communication system. The method may include the following.

At S4210, a second type of AF sends a third request message to a NEF. The third request message is configured to request a creation of a PIN. The third request message includes first identifier information of a PINE and first PIN configuration data. The PINE at least includes a PEGC.

At S4220, the NEF forwards or transparently transmits the third request message to a UDM.

At S4230, the UDM creates the PIN based on the third request message.

At S4240, the UDM sends a first request message to a UDR. The first request message includes the first identifier information of the PINE and the first PIN configuration data. The PINE at least includes a PEGC.

At S4250, the UDR creates policy data based on the first identifier information and the first PIN configuration data. The policy data is used for generating PIN policies.

At S4260, a first response message is sent to the UDM. The first response message includes a creation result of the policy data.

At S4270, the UDM sends a third response message to the NEF based on the first response message.

At S4280, the NEF forwards or transparently transmits the third response message to the second type of AF.

At S4290, in a case where the creation of the policy data fails, the NEF receives a second request message sent by the second type of AF. The second request message includes second PIN configuration data and/or second identifier information of the PINE.

At S4300, the NEF sends the second request message directly to the UDR or sends the second request message to the UDR via the UDM.

At S4310, the UDR recreates the policy data for the PIN based on the second PIN configuration data and/or the second identifier information.

For the contents of the first request message, the third request message, the first response message and the third response message, reference may be made to the context of the same in the embodiments illustrated in FIG. 3A, and for the step of creating the PIN by the UDM and the step of creating the policy data by the UDR, reference may be made to the context of the same in the embodiments illustrated in FIG. 3A.

In the embodiments, in one procedure, not only the creation of the PIN and the initial creation of the policy data are achieved, but also the re-creation of the policy data when the initial creation of the policy data fails may be achieved through the second request message, until the creation of the policy data is successful.

It is noteworthy that the S4220 and the S4230 may be executed simultaneously, the S4220 may be executed before the S4230, or the S4230 may be executed before the S4220.

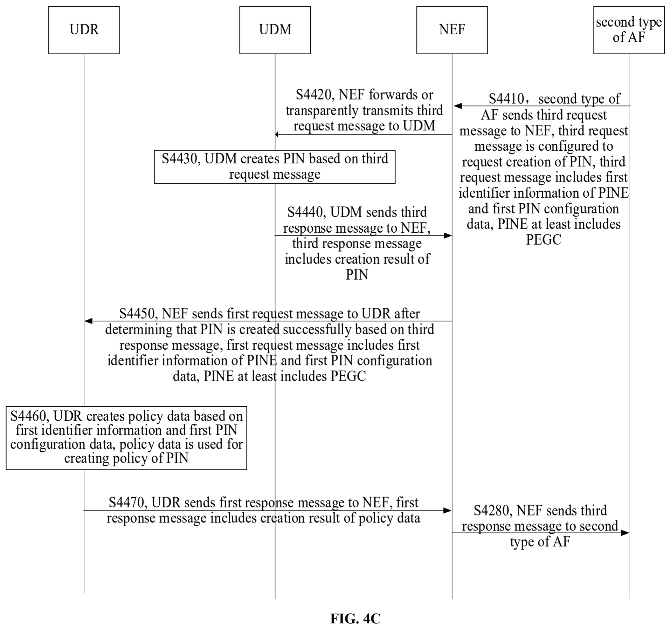

As illustrated in FIG. 4C, embodiments of the disclosure provide a method for processing information performed by a wireless communication system. The method may include the following.

At S4410, a second type of AF sends a third request message to an NEF. The third request message is configured to request a creation of a PIN. The third request message includes first identifier information and first PIN configuration data of a PINE. The PINE at least includes a PEGC.

At S4420, the NEF forwards or transparently transmits the third request message to a UDM.

At S4430, the UDM creates the PIN based on the third request message.

At S4440, the UDM sends a third response message to the NEF. The third response message includes a creation result of the PIN.

At S4450, after determining that the PIN is successfully created based on the third response message, the NEF sends a first request message to a UDR. The first request message includes the first identifier information of the PINE and the first PIN configuration data. The PINE at least includes the PEGC.

At S4460, the UDR creates the policy data based on the first identifier information and the first PIN configuration data. The policy data is used for generating PIN policies.

At S4470, the UDR sends a first response message to the NEF. The first response message includes a creation result of the policy data.

At S4280, the NEF sends a third response message to a second type of AF.

In the embodiments of the disclosure, after successfully creating the PIN, the UDM directly sends the third response message to the NEF. The NF determines whether to send the first request message for requesting the creation of policy data to the UDR, based on the third response message.

For example, in a case where the third response message indicates that the creation of the PIN fails, the NEF may directly send the third response message for indicating the failure to the second type of AF. The third response message may indicate both the failure of the creation of the PIN and the failure of the creation of the policy data, indicate only the failure of the creation of the PIN, or indicate only a failure without specifying the failure of the creation of the PIN and/or the failure of the creation of the policy data.

In the embodiments of the disclosure, in a case where the first response message indicates that the policy data is created successfully, the NEF sends a third response message for indicating that the creation is successful to the second type of AF, and the procedure of creating the PIN and the policy data ends.

For the contents of the first request message, the third request message, the first response message and the third response message, reference may be made to the context of the same in the embodiments illustrated in FIG. 3A, and for the step of creating the PIN by the UDM and the step of creating the policy data by the UDR, reference may be made to the context of the same in the embodiments illustrated in FIG. 3A.

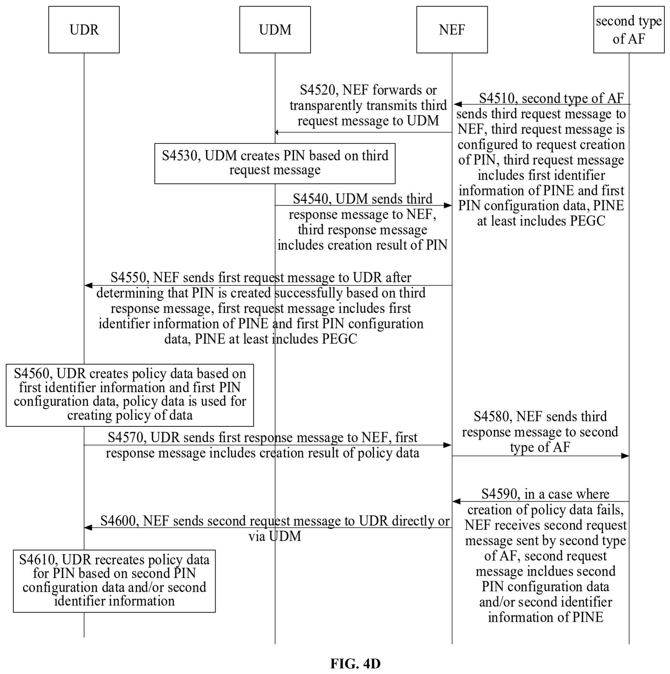

As illustrated in FIG. 4D, embodiments of the disclosure provide a method for processing information performed by a wireless communication system. The method may include the following.

At S4510, a second type of AF sends a third request message to the NEF. The third request message is configured to request a creation of a PIN. The third request message includes first identifier information of a PINE and first PIN configuration data. The PINE at least includes a PEGC.

At S4520, the NEF forwards or transparently transmits the third request message to a UDM.

At S4530, the UDM creates the PIN based on the third request message.

At S4540, the UDM sends a third response message to the NEF. The third response message includes a creation result of the PIN.

At S4550, after determining that the PIN is successfully created based on the third response message, the NEF sends a first request message to a UDR. The first request message includes the first identifier information of the PINE and the first PIN configuration data. The PINE at least includes the PEGC.

At S4560, the UDR creates policy data based on the first identifier information and the first PIN configuration data. The policy data is used for generating PIN policies.

At S4570, the UDR sends a first response message to the NEF. The first response message includes a creation result of the policy data.

At S4580, the NEF sends a third response message to the second type of AF.

At S4590, in the case where the creation of the policy data fails, the NEF receives a second request message sent by the second type of AF. The second request message includes second PIN configuration data and/or second identifier information of the PINE.

At S4600, the NEF sends the second request message to the UDR directly or via the UDM.

At S4610, the UDR recreates the policy data for the PIN based on the second PIN configuration data and/or the second identifier information.

In the embodiments, in the PIN creation procedure, the creation of the PIN and the initial creation of the policy data are achieved, and the recreation of the policy data when the initial creation of the policy data fails is achieved through the second request message until the creation of the policy data is successful.

For the contents of the first request message, the second request message, the third request message, the first response message and the third response message, reference may be made to the context of the same in the embodiments illustrated in FIG. 3A, and for the step of creating the PIN by the UDM and the step of creating the policy data by the UDR, reference may be made to the context of the same in the embodiments illustrated in FIG. 3A.

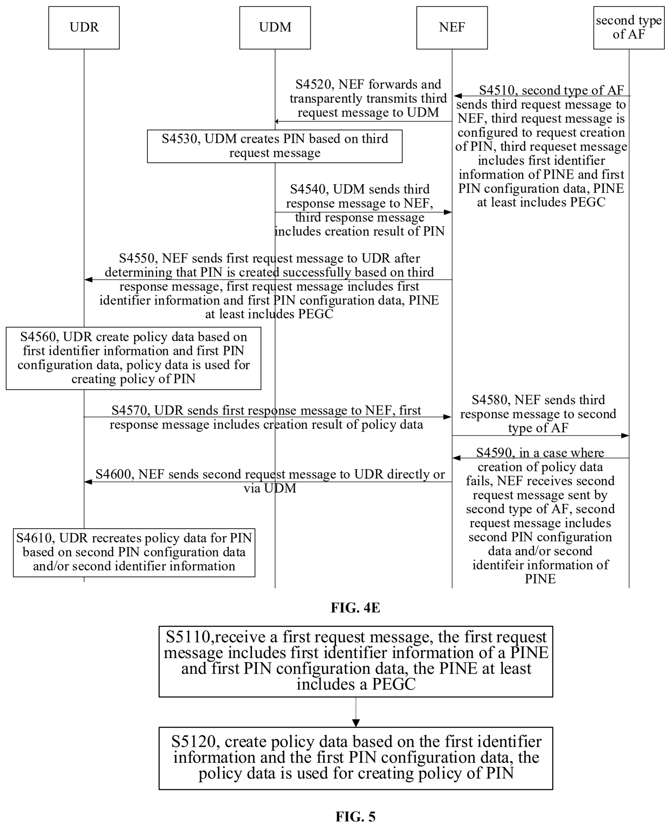

As illustrated in FIG. 4E, embodiments of the disclosure provide a method for processing information performed by a wireless communication system. The method may include the following.

At S4710, a second type of AF sends a third request message to a NEF. The third request message is configured to request a creation of a PIN. The third request message includes first identifier information of a PINE and first PIN configuration data. The PINE at least includes a PEGC.

At S4720, the NEF forwards or transparently transmits the third request message to a UDM.

At S4730, the UDM creates the PIN based on the third request message.

At S4740, the UDM sends a third response message to the NEF. The third response message includes a creation result of the PIN.

At S4750, the NEF forwards or transparently transmits the third response message to the second type of AF.

At S4760, after determining that the PIN is successfully created based on the third response message, the second type of AF sends a first request message to the NEF. The first request message includes the first identifier information and the first PIN configuration data of the PINE. The PINE at least includes the PEGC.

At S4770, the NEF directly sends a first request message to the UDR or sends a first request message to the UDR via the UDM.

At S4780, the UDR sends a first response message to the NEF. The first response message includes a creation result of the policy data.

At S4790, the NEF forwards or transparently transmits the first response message to the second type of AF.

At S4800, the second type of AF determines that the creation of the policy data fails, based on the first response message, and sends a second request message to the NEF. The second request message includes second PIN configuration data and/or second identifier information of the PINE.

At S4810: the NEF sends the second request message to the UDR directly or via the UDM.

At S4820, the UDR recreates the policy data for the PIN based on the second PIN configuration data and/or the second identifier information.

In the embodiments, the NEF may act as a device for forwarding or transparently transmitting between the second type of AF and the UDM and/or the UDR.

For the contents of the first request message, the second request message, the third request message, the first response message and the third response message, reference may be made to the context of the same in the embodiments illustrated in FIG. 3A, and for the step of creating the PIN by the UDM and the step of creating the policy data by the UDR, reference may be made to the context of the same in the embodiments illustrated in FIG. 3A.

In some cases, in conjunction with any one of FIGS. 3A to 3C and 4A to 4D above, in a case where the UDR creates the policy data for the PIN based on the second request message, the UDR will send a method for sending the second request message to the NEF, the UDM, or the first type of AF, and return the second response message. The second response message may include a recreation result of the policy data. The recreation result may be a success result or a failure result.

In a case where the reconstruction result is the failure result, the first type of AF and/or the second type of AF may continue to update one or both of the PIN configuration data and/or the identifier information and continue to request the recreation of the PIN until success.

In a case where the reconstruction result is the success result, the creation is completed.

As illustrated in FIG. 5, embodiments of the disclosure provide a method for processing information performed by a first network device. The method further includes the following.

At S5110, a first request message is received. The first request message includes first identifier information of a PINE and first PIN configuration data. The PINE at least includes a PEGC.

At S5120, policy data is created based on the first identifier information and the first PIN configuration data. The policy data is used for generating PIN policies.

For example, the first network device may be a UDR.

For specific contents and functions of the first request message, the first identifier information, the first PIN configuration data and the policy data, reference may be made to aforementioned embodiments.

For the description of creating the policy data by the UDR based on the first request message, reference may be made to any of afore-mentioned embodiments, which will not be repeated here.

In this way, the UDR will also participate in the creation of the policy data during the procedure of creating the PIN, thereby realizing the creation of the PIN and the policy data in one procedure.

In some embodiments, the first request message is received by the first network device after the PIN is successfully created, or the first request message is received by the first network device after the first PIN identifier of the PIN is successfully assigned.

In some embodiments, receiving the first request message includes at least one of: receiving the first request message sent by a second network device; receiving the first request message sent by a third network device; or receiving the first request message sent by a first type of AF.

In some embodiments, receiving the first request message includes at least one of: receiving the first request message sent, after creating the PIN, by the second network device; receiving the first request message sent, after being notified by the second network device that the creation of the PIN is completed, by the third network device; receiving the first request message sent, after being notified that the creation of the PIN is completed, by the first type of AF.

For example, the second network device may be a device for creating a PIN. The second network device may also be a core network device. For example, the second network device may be a UDM.

The third network device may also be a core network device. For example, the third network device may be a NEF.

The first type of AF may be an AF deployed in a trust domain of the first network device, an AF belong to the same user as the first network device, or an AF that is mutually authenticated and trusted with the first network device.

For example, the third network device receives a third request message sent by the second type of AF. The third request message includes the first identifier information of the PINE and the first PIN configuration data. The PINE at least includes a PEGC. The third request message is configured to request the creation of a PIN.

After receiving the third request message by the third network device, the third network device forwards or transparently transmits the third request message to the second network device. The second network device creates the PIN based on the third request message. After receiving the third response message including the creation result of the PIN by the third network device, the third network device may send the first request message to the first network device in a case where the third response message indicates that the PIN is successfully created.

The second network device creates the PIN based on the third request message. After the PIN is successfully created, the second network device also sends a first request message to the first network device.

Or after receiving the third response message forwarded or transparently transmitted by the third network device and determining that the PIN is successfully created based on the third response message, the second type of AF sends the first request message to the first network device via the third network device, or the second type of AF sends the first request message to the first network device via the third network device and the second network device in turn.

Embodiments of the disclosure provide a method for processing information performed by a first network device. The method further includes the following.

A first request message is received. The first request message includes first identifier information of a PINE and first PIN configuration data. The PINE at least includes a PEGC. Policy data is created based on the first identifier information and the first PIN configuration data. The policy data is used for generating PIN policies.

A first response message is sent. The first response message includes a creation result of the policy data.

For the specific meaning of the policy data, reference may be made to the above embodiments, which will not be repeated here.

The creation result of the policy data may include creation success or creation failure.

Embodiments of the disclosure provide a method for processing information performed by a first network device. The method further includes the following.

A first request message is received. The first request message includes first identifier information of a PINE and first PIN configuration data. The PINE at least includes a PEGC. Policy data is created based on the first identifier information and the first PIN configuration data. The policy data is used for generating PIN policies.

In the case where the creation result is failure, a second request message is received. The second request message includes second PIN configuration data and/or second identifier information of the PINE.

The policy data is recreated for the PIN based on the second PIN configuration data and/or the second identifier information.

If the previous creation of the policy data fails, the UDM may recreate the policy data for the PIN based on the second request message received. For details, reference may be made to any of the above embodiments, which will not be repeated here.

For example, in the case that the creation result is a failure, receiving the second request message includes at least one of:
in the case where the creation of the policy data fails, receiving the second request message sent by a second network device for creating a PIN, in which the second request message sent by the second network device includes second PIN configuration data and/or second identifier information from a second type of AF;
in the case where the creation of the policy data fails, receiving the second request message from a third network device, in which the second request message sent by the third network device includes second PIN configuration data and/or second identifier information from the second type of AF; or
in the case where the creation result of the policy data is the failure result, receiving the second request message from the first type of AF by the UDR, in which the second request message includes second PIN configuration information and second identifier information from the first type of AF.

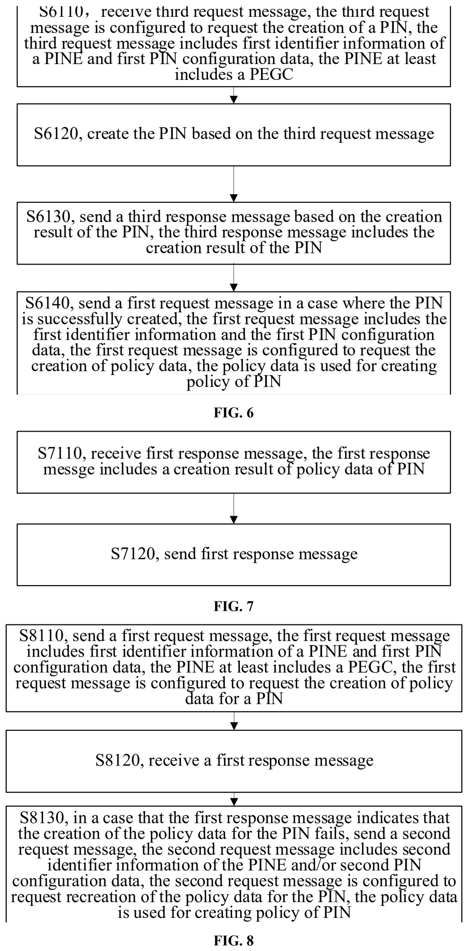

As illustrated in FIG. 6, embodiments of the disclosure provide a method for processing information performed by a second network device. The method further includes the following.

At S6110, a third request message is received. The third request message is configured to request the creation of a PIN. The third request message includes first identifier information of a PINE and first PIN configuration data. The PINE at least includes a PEGC.

At S6120, the PIN is created based on the third request message.

At S6130, a third response message is sent based on the creation result of the PIN. The third response message includes the creation result of the PIN.

At S6140, a first request message is sent. The first request message includes the first identifier information and the first PIN configuration data. The first request message is configured to request the creation of policy data. The policy data is used for creating PIN policies.

The second network device may be a UDM. The UDM may receive the third response message, and thus, in a case where the PIN is successfully created, the second network device may send the first request message to the UDR to request the creation of policy data for the PIN.

In a case where the third response message indicates that the creation of the PIN fails, the UDM may send the third response message. The reason why the creation of the PIN fails may be that the AF does not have an authority of requesting the creation of the PIN, the AF does not have an authority of creating a specified type of PIN, or the first identifier information and/or the first PIN configuration data for the PIN requested to create are wrong. In this case, the failure of the creation of the PIN may be directly indicated by the third response message. If the AF wants to re-create, the creation procedure of the PIN is re-initiated.

In some cases, since the UDM successfully creates the PIN, it means that the probability of causing the creation failure of the policy data due to the first PIN configuration data and/or the first identifier information is small, the UDM or the NEF may directly send the first request message to the UDR, and it is defaulted that the policy data will be created successfully by the UDR. In this case, the UDR may not send the first response message, and thus the UDM and/or the NEF do not need to receive the first response message. In this case, the UDM may directly send the third response message to the AF or send the third response message to the AF via the NEF.

It is noteworthy that for the contents of the third request message, the first request message, the third request message and the third request message, reference may be made to the context of the same in the embodiments of the disclosure, which will not be repeated here.

In some embodiments, sending the first request message by the UDM may include sending the first request message by the UDM to the UDR when the PIN is successfully created or sending the first request message by the UDM to the UDR during the procedure of creating the PIN.

Embodiments of the disclosure provide a method for processing information performed by a second network device. The method further includes the following.

A third request message is received. The third request message is configured to request the creation of a PIN. The third request message includes first identifier information of a PINE and first PIN configuration data. The PINE at least includes a PEGC.

The PIN is created based on the third request message.

A third response message is sent based on a creation result of the PIN. The third response message includes the creation result of the PIN.

A first request message is sent. The first request message includes the first identifier information and the first PIN configuration data. The first request message is configured to request the creation of policy data. The policy data is used for generating PIN policies.

A first response message is received. The first response message includes a creation result of the policy data.

The first response message is sent to a first type of AF or the first response message is sent to a third network device and the first response message is sent by the third network device to a second type of AF.

In a case where the creation of the PIN by the UDM fails, a third response message for indicating the failure of the creation of the PIN is directly sent to the NEF or to the first type of AF. The third response message may be forwarded or transparently transmitted by the NEF to the second type of AF.

In the case that the UDM successfully creates the PIN, the UDM will send a first request message to the UDR and receive a first response message returned by the UDR. In a case where the NEF receives the first response message, the NEF may send the first response message directly to the first type of AF, or the first response message may be directly sent to the second type of AF via the NEF.

In one embodiment, sending the first request message may include sending the first request message in a case where the PIN is created successfully.

Embodiments of the disclosure provide a method for processing information performed by a second network device. The method further includes the following.

A third request message is received. The third request message is configured to request the creation of a PIN. The third request message includes first identifier information of a PINE and first PIN configuration data. The PINE at least includes a PEGC.

The PIN is created based on the third request message.

A third response message is sent based on the creation result of the PIN. The third response message includes the creation result of the PIN.

A first request message is sent. The first request message includes the first identifier information and the first PIN configuration data. The first request message is configured to request the creation of policy data. The policy data is used for generating PIN policies.

A first response message is received. The first response message includes a creation result of the policy data.

The first response message is sent to a first type of AF, or the first response message is sent to a third network device and the first response message is sent by the third network device to a second type of AF.

In a case that the creation of the policy data fails, a fourth request message is received. The fourth request message includes second identifier information of the PINE and/or second configuration.

A second request message is sent based on the fourth request message. The second request message includes second identifier information and/or second PIN configuration data. The second request message is used by the first network device to recreate the policy data for the PIN.

In the embodiments, the UDM sends the first response message to the NEF or directly to the first type of AF. In a case where the creation result of the policy data is failure, the UDM or the NEF may receive a fourth request message. The fourth request message includes the second identifier information and the second PIN configuration information updated for the first type of AF or the second type of AF. Based on the fourth request message, the second request message is sent to the network device for creating the policy data, such as the UDR, to trigger the recreation of the policy data for the PIN.

In some embodiments, in the case that the creation of the policy data fails, receiving the fourth request message includes the following.

In a case that the creation of the policy data fails, the fourth request message sent by the third network device or the first type of AF is received by the second network device.

Sending the second request message based on the fourth request message includes the following.

The second request message is sent to the first network device based on the fourth request message.

The third network device may be an NEF, and the third network device may forward or transparently transmit the fourth request message from the second type of AF.

As illustrated in FIG. 7, embodiments of the disclosure provide a method for processing information performed by a third network device. The method further includes the following.

At S7110, a first response message is received. The first response message includes a creation result of policy data for a PIN.

At S7120, the first response message is sent.

The third network device may be a NEF. The NEF may be a connection interface between an intranet of the core network and an extranet of the core network.

The first response message may come from a network device for creating the policy data, such as a UDR or the like.

After receiving the first response message, the NEF will forward the first response message, to facilitate the network device that needs to receive the first response message to receive it.

For example, the third network device receives the first response message sent by the UDR, and forwards or transparently transmits the first response message to a second type of AF.

As another example, the third network device receives the first response message forwarded or transparently transmitted by the UDM, and forwards or transparently transmits the first response message to the second type of AF.

Embodiments of the disclosure provide a method for processing information performed by a third network device. The method further includes the following.

A first response message is received. The first response message includes the creation result of the policy data for the PIN.

The first response message is sent.

A fourth request message is received. The fourth request message is sent in a case where the policy data is created, and the fourth request message includes second identifier information of a PEGC and/or second configuration.

A second request message is sent. The second request message includes the second identifier information and/or second PIN configuration data. The second request message is usable by the first network device to recreate the policy data for the PIN.

In the case that the first response message indicates that the creation of the policy data fails, the third network device will receive a fourth request message. The fourth request message may include the second identifier information and the second PIN configuration data required for recreating the policy data.

For example, the NEF receives the fourth message from the second type of AF.

As another example, after receiving the fourth response message, the NEF forwards or transparently transmits the second request message to the UDR for creating the policy data.

In some embodiments, receiving the first response message includes: receiving the first response message sent by the first network device or the second network device.

In addition, or in some examples, sending the first response message includes sending the first response message to the second type of AF.

In addition, or in some examples, receiving the fourth request message includes receiving the fourth request message sent by the second type of AF.

In addition, or in some examples, sending the second request message includes sending the second request message to the first network device.

As illustrated in FIG. 8, embodiments of the disclosure provide a method for processing information performed by a first type of AF. The method includes the following.

At S8110, a first request message is sent. The first request message includes first identifier information of a PINE and first PIN configuration data. The PINE at least includes a PEGC. The first request message is configured to request the creation of policy data for a PIN.

At S8120, a first response message is received.

At S8130, in a case that the first response message indicates that the creation of the policy data for the PIN fails, a second request message is sent. The second request message includes second identifier information of the PINE and/or second PIN configuration data. The second request message is configured to request recreation of the policy data for the PIN. The policy data is used for creating PIN policies.

The first type of AF may be an AF deployed in a core network. For example, the first type of AF may be an AF deployed by a communication operator.

For example, the first type AF may send the first request message to a UDR or a UDM.

For example, the first type of AF may directly receive a first response message from the UDR or may receive the first response message forwarded or transparently transmitted by the UDM from the UDR. The first response message at least indicates a creation result of the policy data for the PIN.

For example, the second request message may be sent to the NEF and forwarded or transparently transmitted by the NEF to the UDM and/or the UDR.

In some embodiments, sending the first request message includes sending the first request message to the first network device.

In addition, or in some examples, receiving the first response message includes receiving the first response message sent by the first network device. The first network device is configured to create the policy data for the PIN.

The first network device may be a UDR.

For example, sending the first request message includes sending the first request message to the second network device.

In addition, or in some examples, receiving the first response message includes receiving the first response message sent by a second network device. The second network device is configured to create the PIN and to forward the first request message to the second network device. The second network device is configured to create the policy data for the PIN.

The second network device may be a UDM. In this case, the first request message may be forwarded by the second network device to the first network device.

In some embodiments, before sending the first request message, the method further includes the following.

A third request message is sent. The third request message is configured to request the creation of a PIN. The third request message includes first identifier information of the PINE and first PIN configuration data. The PINE at least includes a PEGC.

A third response message is received. The third response message includes a creation result of the PIN.

For example, a first type of AF may send the third request message to the second network device. The third request message is configured to request the creation of a PIN. The third request message may be sent before the first request message.

The third response message may indicate the creation result of the PIN.

In another embodiment, the third response message may include the creation result of the PIN and the creation result of the policy data.

For example, sending the third request message includes sending the third request message to the second network device.

Receiving the third response message includes receiving the third response message sent by the second network device.

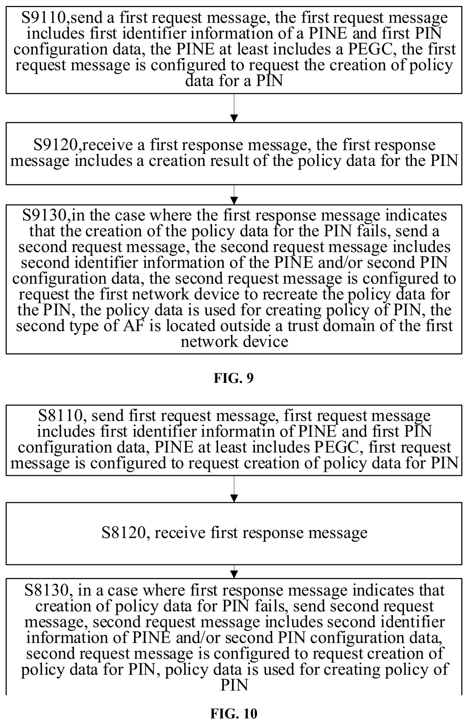

As illustrated in FIG. 9, embodiments of the disclosure provide a method for processing information performed by a second type of AF. The method includes the following.

At S9110, a first request message is sent. The first request message includes first identifier information of a PINE and first PIN configuration data. The PINE at least includes a PEGC. The first request message is configured to request the creation of policy data for a PIN.

At S9120, a first response message is received. The first response message includes a creation result of the policy data for the PIN.

At S9130, in the case where the first response message indicates that the creation of the policy data for the PIN fails, a second request message is sent. The second request message includes second identifier information of the PINE and/or second PIN configuration data. The second request message is configured to request the first network device to recreate the policy data for the PIN. The policy data is used for creating PIN policies. The second type of AF is located outside a trust domain of the first network device.

The second type of AF may be an AF deployed by a third party, such as an application server deployed by an application service provider.

For the content and/or the function of the first request message, the first response message, and the second request message, reference may be made to any of afore-mentioned embodiments, which will not be repeated here.

In some embodiments, sending the first request message includes sending the first request message to a third network device, in which first request message is forwarded or transparently transmitted by the third network device to the first network device; and/or receiving the first response message includes receiving the first response message forwarded or transparently transmitted by the third network device.

In some embodiments, before sending the first request message, the method further includes the following.

A third request message is sent. The third request message is configured to request the creation of a PIN. The third request message includes first identifier information of the PINE and first PIN configuration data. The PINE at least includes a PEGC.

A third response message is received. The third response message includes a creation result of the PIN.

The third request message may be sent by the second type of AF to a NEF, and then sent to the UDR via the NEF.

For example, sending the third request message includes: sending the third request message to the third network device. The third request message is forwarded or transparently transmitted by the third network device to the second network device for creating the PIN.

In addition, or in some examples, receiving the third response message includes receiving the third response message forwarded or transparently transmitted by the third network device.

As illustrated in FIG. 10, embodiments of the disclosure provide a method for processing information performed by a core network device. The method includes the following.

At S0110, a first request message is received. The first request message includes first identifier information of a PINE and first PIN configuration data. The PINE at least includes a PEGC. At S0120, policy data for the PIN is created based on the first request message.

At S0130, a first response message is sent. The first response message includes a creation result of the policy data.

The core network device may be any network device, network element or network function located in the CN.

For the step of creating the PIN, reference may be made to the step of creating a PIN by UDM in any of the above embodiments.

In some embodiments, the first request message includes the first request message received by the first network device from a second network device, a third network device or a first type of AF.

In addition, or in some examples, creating the policy data for the PIN based on the first request message includes creating the policy data for the PIN by the first network device based on the first request message.

In addition, or in some examples, sending the first response message includes: sending the first response message by the first network device to the second network device, the third network device or the first type of AF.

In some embodiments, the method further includes the following.

The third network device transparently transmits or forwards the first response message to a second type of AF.

In some embodiments, the method further includes the following.

The second network device forwards or transparently transmits the first response message to the third network device.

Embodiments of the disclosure provide a method for processing information performed by a communication system. The method includes the following.

The first network device receives the first request message. The first request message includes the first identifier information of the PINE and the first PIN configuration data. The PINE at least includes a PEGC.

The policy data for the PIN is created based on the first request message.

The first response message is sent to the second network device or the third network device. The first response message includes a creation result of the policy data. The first response message received by the second network device is forwarded or transparently transmitted to the third network device. The first response message is forwarded or transparently transmitted by the third network device to the second type of AF.

In some embodiments, the first request message includes the first request message received by the first network device from the second network device or the third network device, and/or sending the first response message includes sending the first response message by the first network device to the second network device or the third network device.

In some embodiments, the third network device receives the first request message sent by the second type of AF and transparently transmits or forwards the first request message to the first network device. In addition, or in some examples, the third network device receives the first response message and forwards or transparently transmits the first response message to the second type of AF.

In some embodiments, the method further includes receiving a third request message by the second network device. The third request message includes the first identifier information and the first PIN configuration data. The third request message is a message for requesting a PIN.

The third request message may include a PIN creation indicator, which may be configured to request the creation of the PIN.

The method of creating the PIN based on an authorized third party involves allocating PIN parameters by the UDM and storing PIN policies and PIN subscription data.

Assuming that when the AF decides to create one PIN, the GPSIs of the PEGC, PINE or PEMC are determined, and the PIN configuration data consisting of the PIN policy control data and the PIN subscription data is determined.

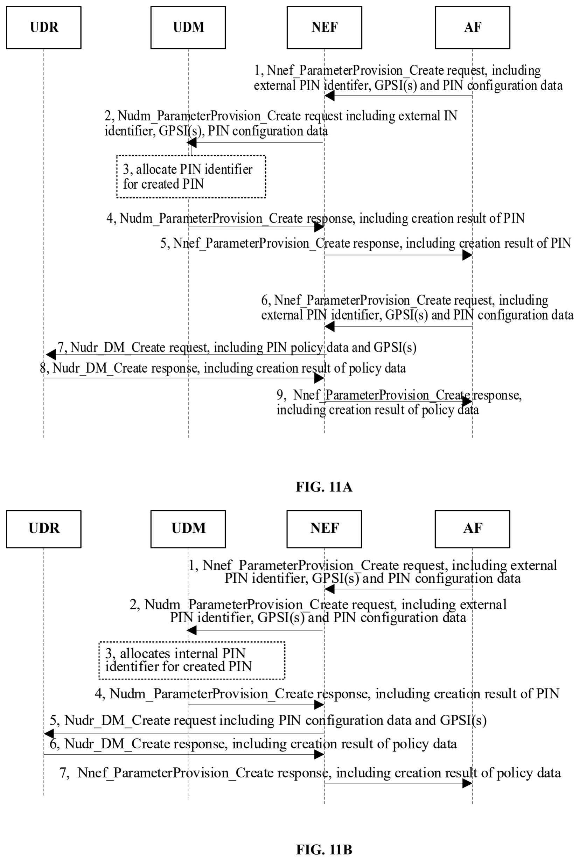

As illustrated in FIG. 11A, embodiments of the disclosure provide a method for processing information. The method may include the following.
1. AF invokes Nnef_ParameterProvision_Create request and sends external PIN identifier, GPSI(s), PIN creation indication, and PIN configuration data to NEF.
   The PIN configuration data includes:
   Policy data, including routing rules, QoS parameters, etc. or
   PIN subscription data, including mobility subscription data and/or session subscription data, etc.
2. NEF invokes Nudm_ParameterProvision_Create request to UDM, including external PIN identifier, for PIN creation indication, GPSI(s), PIN configuration data, in order to for UDM to creater a PIN.
3. UDM allocates an internal PIN identifier for the PIN when receiving the *for PIN creation indication*, and associates it with the external PIN identifier and the GPSI(s). The creation indication may indicate a request to create a PIN.
4. UDM invokes Nudm_ParameterProvision_Create responseto send the result to NEF.
5. NEF sends the result to AF by invoking Nnef_ParameterProvision_Create response.
6. When AF determines to provision the policy data of the PIN to UDR via NEF once the PIN is created, AF invokes the Nnef_ParameterProvision_Create or Nnef_ParameterProvision_update request, including the GPSI(s) and the policy data of the PIN.
7. NEF invokes Nudr_DM_Create request or Nudr_DM_update request to UDR including PIN policy control data, GPSI(s).
8. UDR creates or updates the policy data of the PIN for corresponding UE with the requested GPSI(s) and invokes the Nudr_DM_Create response to send the result to NEF.
9. NEF sends the result to AF.

As illustrated in FIG. 11B, embodiments of the disclosure provide a method for processing information. The method may include the following.
1. AF invokes Nnef_ParameterProvision_Create request (external PIN identifier, GPSI(s), for PIN creation indication, PIN configuration data). The GPSI(s) are the identifier of PEGC or PEMC or PINE of the PIN sent from AF.
   PIN configuration data includes:
   Policy data, including routing rules, QoS parameters, etc. or
   PIN subscription data, including mobility contract data, session contract data, etc.
2. NEF invokes Nudm_ParameterProvision_Create request to UDM, including external PIN identifier, for PIN creation indications, GPSI(s), PIN configuration data, in order to for UMD to create a PIN.
3. UDM allocates an internal PIN identifier for the PIN when receiving the *for PIN creation indication*, and associates it with the external PIN identifier, and the GPSI(s).
4. UDM invokes Nudm_ParameterProvision_Create response to send the result to NEF.
5. NEF directly invokes Nudr_DM_Create to request to create policy data of the PIN for the UE(s) corresponding to the received GPSI(s).
6. UDR creates or updates the policy data of the PIN for corresponding UE with the requested GPSI(s) and invokes Nudr_DM_Create response to send the result to NEF.
7. NEF sends the result to AF.

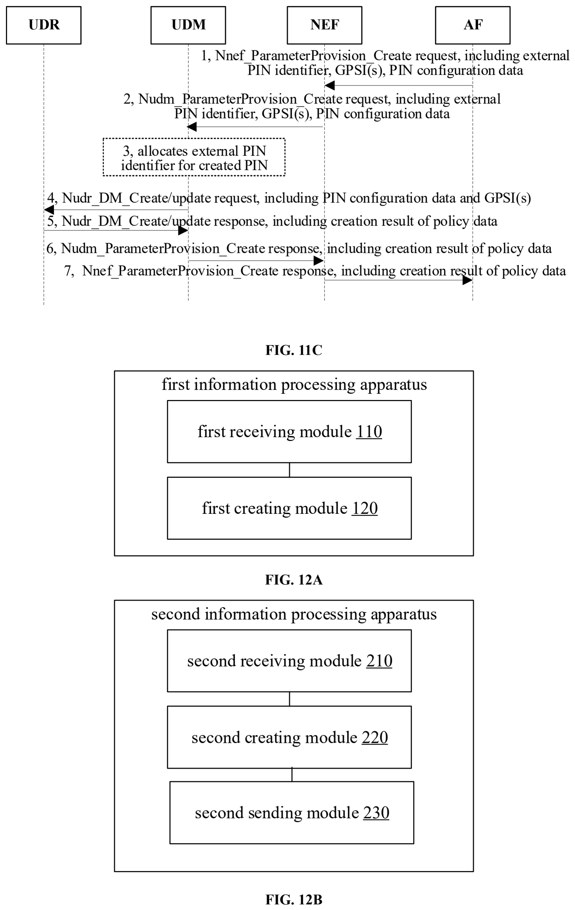

As illustrated in FIG. 11C, embodiments of the disclosure provide a method for processing information. The method may include the following.
1. AF invokes Nnef_ParameterProvision_Create request (external PIN identifier, GPSI(s), for PIN creation indication, PIN configuration data). The GPSI(s) are the identifier of PEGC or PEMC or PINE of the PIN sent from AF.
   PIN configuration data includes:
   Policy data, including routing rules, QoS parameters, etc. or
   PIN subscription data, including mobility contract data, session contract data, etc.
2. NEF invokes Nudm_ParameterProvision_Create request to UDM, including external PIN identifier, for PIN creation indications, GPSI(s), PIN configuration data, in order to for UMD to create a PIN.
3. UDM allocates an internal PIN identifier for the PIN when receiving the *for PIN creation indication*, and associates it with the external PIN identifier, and the GPSI(s).
4. UDM invokes Nudm _DM_Create request or Nudr_DM_Update request to UDR to create policy data of the PIN for the UE with requested GPSI(s).
5. UDR sends the result to UDM, by invoking Nudr_DM_Create response or Nudr_DM_Update response.
6. UDM invokes the Nudm_ParameterProvision_Create response to send the result to NEF.
7. NEF sends the result to AF by invoking the Nnef_ParameterProvision_Create response.

Embodiments of the disclosure provide a method for processing information. The method includes the following.

When the AF determines to create one PIN, the AF sends a PIN creation request to the NEF. The PIN creation request may include an external PIN ID, an optional PINE list including device information of normal PINE, PEGC, and/or PEMC, and/or optional PIN configuration data. The PIN creation request may be one of afore-mentioned third request messages. For example, the third request message may also include a creation indication.

For example, the PINE list may include device information, such as capability information and/or type information of devices. The PIN configuration data may include various configuration data when a communication device acts as a PINE. For example, the configuration data includes, but is not limited to, role information of a communication device acting as a PINE, valid time information of acting as a PINE, and/or valid area information of acting as a PINE. The role information indicates whether the PINE is a normal PINE, a PEMC or a PEGC. The valid time information may indicate a time range when the communication device acts as a PINE. The valid area information may indicate a valid range where the communication device acts as a PINE. For example, the communication device will no longer continue to act as a PINE outside the valid time and/or the valid area.

NEF sends the received external PIN ID, PEGC list and PIN configuration data to UDM.

UDM creates a unique internal PIN ID based on the external PIN ID and establishes a one-to-one mapping between the internal PIN ID and the external PIN ID. The PINE list is also included, which may be device information of PINEs such as PINE, PEGC and/or PEMC.

The UDM sends a PIN context to the UDR, including an internal PIN ID, an external PIN ID, a PINE list (which may be PINE, PEGC, PEMC), and PIN configuration data. The PIN context may include a PIN configuration file.

UDM sends a PIN creation response including a response result to AF via NEF.

The internal PIN ID is uniquely identifiable in the 5G network. Whether the PIN ID is defined as an external PIN identifier similar to the external group identifier and GPSI and as a 5G internal PIN identifier similar to the internal group identifier will be determined at the specification stage.

However, only the PIN ID assigned by the third party cannot be guaranteed to be unique in 5GC. Therefore, it may be necessary to add a uniquely identifiable PIN ID in 5GC, which is related to the PIN ID assigned by the third party.

As illustrated in FIG. 12A, embodiments of the disclosure provide a first apparatus for processing information. The first apparatus further includes:

a first receiving module 110 configured to receive a first request message, in which the first request message includes first identifier information of a PINE and first PIN configuration data, the PINE at least includes a PEGC; and a first creating module 120 configured to create policy data based on the first identifier information and the first PIN configuration data, in which the policy data is used for generating a policy of a PIN.

The apparatus for processing information may be a first network device, and the first network device may be a UDR or the like.

For example, the first receiving module 110 and the first creating module 120 may be program modules, which may implement the above operations after being executed by a processor.

In other embodiments, the first receiving module 110 and the first creating module 120 may be a software-hardware combination module, which may include, but is not limited to, various programmable arrays, including, but not limited to, field programmable arrays and/or complex programmable arrays.

In some other embodiments, the first receiving module 110 and the first creating module 120 may be pure-hardware modules, which may include, but are not limited to, application specific integrated circuits.

In some embodiments, the first receiving module 110 is configured to perform at least one of:
receiving the first request message sent by a second network device;
receiving the first request message sent by a third network device; or
receiving the first request message sent by a first type of AF.

In some embodiments, the first sending module is configured to send a first response message, in which the first response message includes a creation result of the policy data.

In some embodiments, the first receiving module 110 is configured to receive a second request message in a case that the creation result is a failure, in which the second request message includes second PIN configuration data and/or second identifier information of the PINE.

The first creation module 120 is further configured to recreate the policy data for the PIN based on the second PIN configuration data and/or the second identifier information.

In some embodiments, the first receiving module 110 is further configured to perform at least one of:
in the case where a PIN policy control creation fails, receiving a second request message sent by a second network device for creating the PIN, in which the second request message sent by the second network device includes second PIN configuration data and/or second identifier information from a second type of AF;
in a case where a PIN policy control creation fails, receiving a second request message sent by a third network device, in which the second request message sent by the third network device includes second PIN configuration data and/or second identifier information from a second type of AF;
in a case where the creation result is failure, receiving a second request message from the first type of AF, in which the second request message includes second PIN information and second identifier information from the first type of AF.

As illustrated in FIG. 12B, embodiments of the disclosure provide a second apparatus for processing information. The second apparatus further includes:
a second receiving module 210, configured to receive a third request message, in which the third request message is configured to request a creation of a PIN, the third request message includes first identifier information of a PINE and first PIN configuration data; and the PINE at least includes a PEGC;
a second creating module 220, configured to create the PIN based on the third request message; and
a second sending module 230, configured to send a third response message based on a creation result of the PIN, in which the third response message includes the creation result of the PIN;
the second sending module 230 is configured to send a first request message in a case where the PIN is successfully created, the first request message includes the first identifier information and the first PIN configuration data, the first request message is configured to request a creation of policy data, and the policy data is used for generating a policy of the PIN.

The apparatus for processing information may be a second network device, and the second network device may be a UDM, etc.

For example, the second receiving module 210, the second creating module 220 and the second sending module 230 may be program modules, which may implement the above operations after being executed by a processor.

In other embodiments, the second receiving module 210, the second creating module 220 and the second sending module 230 may be software-hardware combination modules, which may include, but is not limited to, various programmable arrays, including, but not limited to, field programmable arrays and/or complex programmable arrays.

In some other embodiments, the second receiving module 210, the second creating module 220 and the second sending module 230 may be pure-hardware modules, which may include, but are not limited to, application specific integrated circuits.

It may be understood that the second receiving module 210 is further configured to receive a first response message, in which the first response message includes a creation result of the policy data.

The second sending module 230 is configured to send the first response message to the first type of AF or send the first response message to the third network device, in which the first response message is sent by the third network device to a second type of AF.

It may be understood that the second receiving module 210 is further configured to receive a fourth request message in a case where a creation of the policy data fails, in which the fourth request message includes second identifier information of the PINE and/or a second configuration.

The second sending module 230 is further configured to send a second request message based on the fourth request message, in which the second request message includes the second identifier information and/or the second PIN configuration data, and the second request message is used by the first network device to recreate the policy data for the PIN.

It may be understood that the second receiving module 210 is further configured to receive a fourth request message sent by the third network device or the first type of AF in a case where a creation of the policy data fails.

The second sending module 230 is further configured to send a second request message to the first network device based on the fourth request message.

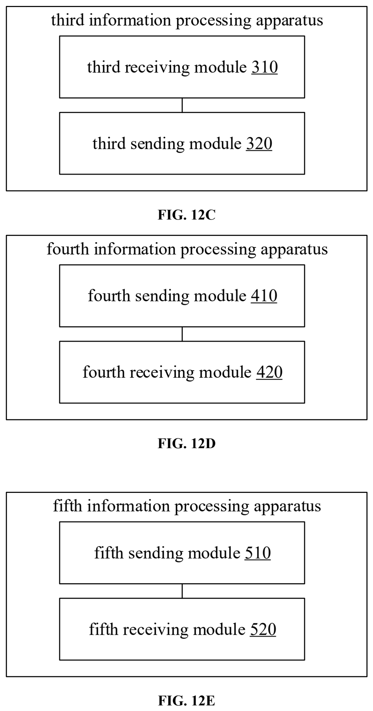

As illustrated in FIG. 12C, embodiments of the disclosure provide a third apparatus for processing information. The third apparatus further includes:
a third receiving module 310 configured to receive a first response message, in which the first response message includes a creation result of policy data for a PIN; and
a third sending module 320, configured to send a first response message.

The apparatus for processing information may be a third network device. The third network device may be a NEF.

For example, the third receiving module 310 and the third sending module 320 may be program modules, which may implement the above operations after being executed by a processor.

In other embodiments, the third receiving module 310 and the third sending module 320 may be software-hardware combination modules, which may include, but are not limited to, various programmable arrays, including, but not limited to, field programmable arrays and/or complex programmable arrays.

In some embodiments, the third receiving module 310 and the third sending module 320 may be pure-hardware modules, which may include, but are not limited to, application specific integrated circuits.

It may be understood that the third receiving module 310 is configured to receive a fourth request message, in which the fourth request message is sent in a case where the creation of the policy data fails, and the fourth request message includes second identifier information of the PINE and/or a second configuration.

The third sending module 320 is configured to send a second request message, in which the second request message includes the second identifier information and/or the second PIN configuration data, and the second request message is used by the first network device to recreate the policy data for the PIN.

It may be understood that the third receiving module 310 is configured to receive the first response message sent by the first network device or the second network device;
and/or the third sending module 320 is configured to send the first response message to the second type of AF;
and/or the third receiving module 310 is configured to receive the fourth request message sent by the second type of AF;
and/or the third sending module 320 is configured to send the second request message to the first network device.

As illustrated in FIG. 12D, embodiments of the disclosure provide a fourth apparatus for processing information. The fourth apparatus includes:
a fourth sending module 410, configured to send a first request message, in which the first request message includes first identifier information of a PINE and first PIN configuration data, the PINE at least includes a PEGC, and the first request message is configured to request a creation of policy data for a PIN; and
a fourth receiving module 420, configured to receive a first response message, in which the first response message includes a creation result of the policy data for the PIN;
the fourth sending module 410 is configured to send a second request message in a case where the first response message indicates that the creation of the policy data for the PIN fails, in which the second request message includes second identifier information of the PINE and/or second PIN configuration data, the second request message is configured to request a recreation of the policy data for the PIN, and the policy data is used for generating a policy of the PIN.

The apparatus for processing information may be a first type of AF. The first type of AF may be deployed in a core network. For example, the first type of AF may be an AF deployed by a communication operator.

In some embodiments, the fourth sending module 410 and the fourth receiving module 420 may be program modules, which may implement the above operations after being executed by a processor.

In other embodiments, the fourth sending module 410 and the fourth receiving module 420 may be software-hardware combination modules, which may include, but are not limited to, various programmable arrays, including, but not limited to, field programmable arrays and/or complex programmable arrays.

In some embodiments, the fourth sending module 410 and the fourth receiving module 420 may be pure-hardware modules, which may include, but are not limited to, application specific integrated circuits.

It may be understood that the fourth sending module is configured to send a first request message to the first network device;
and/or the fourth receiving module is configured to receive a first response message sent by the first network device, in which the first network device is configured to create the policy data for the PIN.

It may be understood that the fourth sending module is configured to send a first request message to the second network device;
and/or the fourth receiving module is configured to receive a first response message sent by a second network device, in which the second network device is configured to create a PIN and to forward the first request message to the second network device, and the second network device is configured to create the policy data for the PIN.

It may be understood that before sending the first request message, the fourth sending module is further configured to send a third request message, in which the third request message is configured to request the creation of a PIN, the third request message includes the first identifier information of the PINE and the first PIN configuration data, and the PINE at least includes a PEGC; and
to receive a third response message, in which the third response message includes a creation result of the PIN.

It may be understood that the fourth sending module is configured to send a third request message to the second network device.

The fourth receiving module is configured to receive a third response message sent by the second network device.

As illustrated in FIG. 12E, embodiments of the disclosure provide a fifth apparatus for processing information. The fifth apparatus includes:
a fifth sending module 510 configured to send a first request message, in which the first request message includes first identifier information of a PINE and first PIN configuration data, the PINE at least includes a PEGC, and the first request message is configured to request a creation of policy data for a PIN;
a fifth receiving module 520 configured to receive a first response message, in which the first response message includes a creation result of the policy data;
the fifth sending module 510 is configured to send a second request message in a case where the first response message indicates that the creation of the policy data for the PIN fails, in which the second request message includes second identifier information of the PINE and/or second PIN configuration data, the second request message is configured to request the first network device to recreate the policy data for the PIN, the policy data is used for generate a policy of the PIN, and a second type of AF is located outside a trust domain of the first network device.

The apparatus for processing information may be the second type of AF.

In some embodiments, the fifth sending module and the fifth receiving module may be program modules, which may implement the above operations after being executed by the processor.

In other embodiments, the fifth sending module and the fifth receiving module may be software-hardware combination modules, which may include, but are not limited to, various programmable arrays, including, but not limited to, field programmable arrays and/or complex programmable arrays.

In some embodiments, the fifth sending module and the fifth receiving module may be pure-hardware modules, and the pure-hardware modules may include, but are not limited to, application-specific integrated circuits.

Embodiments of the disclosure provide a communication system, including a first network device and further a second network device and/or a third network device.

The first network device is configured to receive a first request message. The first request message includes first identifier information of a PINE and first PIN configuration data. The PINE at least includes a PEGC. The first network device is configured to create policy data for the PIN based on the first request message, and to send a first response message to a second network device or a third network device. The first response message includes a creation result of the policy data. The first response message received by the second network device is forwarded or transparently transmitted to the third network device, and the first response message is forwarded or transparently transmitted by the third network device to a second type of AF.

For example, the first network device may be a UDR, and the second network device may be a UDM.

In addition to the UDR and the UDM, the communication system may also include at least one AF, which may be a first type of AF or a second type of AF.

For example, in a case where the communication system includes the second type of AF, the communication system may further include a third network device, which may be a NEF.

The disclosure provides a communication device including:
a memory for storing processor-executable instructions; and
a processor, connected to the memory;
in which the processor is configured to perform the method for processing information according to any of the afore-mentioned technical solutions.

The processor may include various types of storage media, which are non-transitory computer storage media that may continue to retain information stored thereon after the communication device loses power.

Here, the communication device includes UE or a network element. The network element may be any one of the first network element to the fourth network element mentioned above.

The processor may be connected to the memory via a bus or the like and may be configured to read an executable program stored in the memory, for example, at least one of the methods illustrated in FIG. 4 to FIG. 9.

In an example embodiment, a non-transitory computer-readable storage medium including instructions is also provided, such as a memory including instructions, and the instructions may be executed by a processor to perform the above methods. For example, the non-transitory computer-readable storage medium may be a ROM, a random access memory (RAM), a CD-ROM, a magnetic tape, a floppy disk, an optical data storage device, etc.

As illustrated in FIG. 14, embodiments of the disclosure provide a structure of a network device. For example, the network device 900 may be a network side device. The communication device may be various network elements such as the afore-mentioned access network element and/or network function.

As illustrated in FIG. 14, the network device 900 includes a processing component 922, which further includes one or more processors, and a memory resource represented by a memory 932 for storing instructions that may be executed by the processing component 922, such as an application. The application stored in the memory 932 may include one or more modules each corresponding to a set of instructions. In addition, the processing component 922 is configured to execute instructions to perform any of the afore-mentioned methods performed by the access device, for example, any method illustrated in any one of FIG. 4 to FIG. 9.

The network device 900 may also include a power supply component 926 configured to perform power management of the network device 900, a wired or wireless network interface 950 configured to connect the network device 900 to a network, and an input/output (I/O) interface 958. The network device 900 may operate based on an operating system stored in the memory 932, such as Windows Server^{™}, Mac OS X^{™}, Unix^{™}, Linux^{™}, FreeBSD^{™} or the like.

It should be understood that the division of the units or modules in the above device is only a division of logical functions, and in actual implementation, they may be fully or partially integrated into one physical entity, or they may be physically separated. In addition, the units or modules in the device may be implemented through the processor calling software. For example, the device includes a processor, the processor is connected to a memory having instructions stored therein, and the processor is configured to call the instructions stored in the memory to implement any of the above methods or implement the functions of the units or modules of the above apparatuses. The processor is, for example, a general-purpose processor, such as a central processing unit (CPU) or a microprocessor. The memory is inside the device or outside the device. In some examples, the units or modules in the device may be implemented in the form of hardware circuits, and the functions of some or all of the units or modules may be realized by designing the hardware circuits. The above hardware circuits may be understood as one or more processors. For example, in one implementation, the above hardware circuit is an application-specific integrated circuit (ASIC), and the functions of some or all of the above units or modules are realized by designing the logical relationship of the components in the circuit. For example, in another implementation, the above hardware circuit may be realized by a programmable logic device (PLD), taking a field programmable gate array (FPGA) as an example, which may include a large number of logic gate circuits, and the connection relationship between the logic gate circuits is configured by a configuration file, so as to realize the functions of some or all of the above units or modules. All units or modules of the above devices may be implemented entirely through the processor calling software, entirely through hardware circuits, or partially through the processor calling software and partially through hardware circuits.

In the embodiments of the disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP), or the like. In another implementation, the processor may implement certain functions through the logical relationship of hardware circuits, and the logical relationship of the above hardware circuits is fixed or reconfigurable, such as a hardware circuit implemented by a processor as an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it may also be a hardware circuit designed for artificial intelligence, which may be understood as an ASIC, such as a neural network processing unit (NPU), a tensor processing unit (TPU), a deep learning processing unit (DPU).

Without contradiction, each step in a certain implementation or example may be implemented as an independent example, and the steps may be arbitrarily combined. For example, a solution after removing some steps in a certain implementation or example may also be implemented as an independent example, and the order of the steps in a certain implementation or example may be arbitrarily exchanged. In addition, the optional methods or optional examples in a certain implementation or example may be arbitrarily combined. In addition, the various implementations or examples may be arbitrarily combined. For example, some or all steps of different implementations or examples may be arbitrarily combined, and a certain implementation or example may be arbitrarily combined with the optional methods or optional examples of other implementations or examples.

Those skilled in the art will readily appreciate other implementations of the embodiments after considering the specification and practicing the disclosure herein. The disclosure is intended to cover any variations, uses, or adaptations of the embodiments, which follow the general principles of the embodiments and include common knowledge or customary technical means in the art that are not disclosed in the disclosure. The specification and examples are to be considered as illustrative only, and the true scope and spirit of the embodiments are indicated by the following claims.

It should be understood that the embodiments of the disclosure are not limited to the precise structures described above and shown in the drawings, and various modifications and changes may be made without departing from the scope thereof. The scope of the embodiments of the disclosure is limited only by the appended claims.

## Claims

1. A method for processing information, performed by a first network device, the method comprising:
receiving a first request message, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC); and
determining first data for the PIN based on the first identifier and the first configuration, wherein the first data is data for generating a policy of the PIN.

2. The method of claim 1, wherein the first request message is sent by a second network device, by a third network device or by a first type of application function.

3. The method of claim 1 or 2, further comprising:
sending a first response message, wherein the first response message comprises first information, and the first information is configured to indicate a creation result of the first data.

4. The method of claim 3, further comprising:
receiving a second request message, wherein a creation of the first data fails, and the second request message comprises a second configuration and/or a second identifier; and
recreating the first data for the PIN based on the second configuration and/or the second identifier.

5. The method of claim 4, wherein the second request message is sent by a second network device, by a third network device or by a first type of application function (AF).

6. A method for processing information, performed by a second network device, the method comprising:
receiving a third request message, wherein the third request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
creating the PIN based on the third request message;
sending a third response message; wherein the third response message comprises second information, and the second information is configured to indicate a creation result of the PIN; and
sending a first request message, wherein the first request message comprises the first identifier and the first configuration, the first identifier and the first configuration are used for creating first data; and the first data is data for generating a policy of the PIN.

7. The method of claim 6, further comprising:
receiving a first response message, wherein the first response message comprises second information, and the second information is configured to indicate a creation result of the first data; and
sending the first response message to a first type of application function (AF) or a third network device.

8. The method of claim 7, further comprising:
receiving a fourth request message, wherein a creation of the first data fails, and the fourth request message comprises a second identifier and/or a second configuration; and
sending a second request message based on the fourth request message; wherein the second request message comprises the second identifier and/or the second configuration, and the second request message is configured to request a first network device to recreate the first data for the PIN.

9. The method of claim 8, wherein the fourth request message is sent by the third network device or by the first type of AF.

10. The method of any one of claims 6 to 9, wherein the first request message is sent after the PIN is successfully created.

11. A method for processing information, performed by a third network device, the method comprising:
receiving a first response message, wherein the first response message comprises first information, and the first information is configured to indicate a creation result of first data for a personal internet of things network (PIN); and
sending the first response message.

12. The method of claim 11, further comprising:
receiving a fourth request message, wherein a creation of the first data fails, and the fourth request message comprises a second identifier and/or a second configuration; and
sending a second request message, wherein the second request message comprises the second identifier and/or the second configuration, and the second request message is configured to recreate the first data.

13. A method for processing information, performed by a first type of application function (AF), the method comprising:
sending a first request message, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
receiving a first response message, wherein the first response message comprises first information, and the first information is a creation result of first data for the PIN;
sending a second request message, wherein a creation of the first data fails, the second request message comprises a second identifier and/or a second configuration, the second request message is configured to request a re-creation of the first data, and the first data is used for generating a policy of the PIN.

14. The method of claim 13, before sending the first request message, further comprising:
sending a third request message, wherein the third request message comprises the first identifier and the first configuration, and the third request message is configured to request the creation of the PIN; and
receiving a third response message, wherein the third response message comprises second information, and the second information is configured to indicate a creation result of the PIN.

15. A method for processing information, performed by a second type of application function (AF), the method comprising:
sending a first request message, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
receiving a first response message, wherein the first response message comprises first information, and the first information is configured to indicate a creation result of first data for the PIN; and
sending a second request message, wherein a creation of the first data fails, the second request message comprises a second identifier and/or a second configuration, the second request message is configured to request a first network device to recreate policy data, the policy data is configured to generate a policy of the PIN, and the second type of AF is located outside a trust domain of the first network device.

16. The method of claim 15, before sending the first request message, further comprising:
sending a third request message, wherein the third request message is configured to request a creation of the PIN, the third request message comprises the first identifier and the first configuration, and the PINE at least comprises the PEGC; and
receiving a third response message, wherein the third response message comprises second information, and the second information is configured to indicate a creation result of the PIN.

17. A method for processing information, performed by a core network device, the method comprising:
receiving a first request message, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
creating first data for the PIN based on the first request message; and
sending a first response message, wherein the first response message comprises a creation result of the first data.

18. A method for processing information, performed by a communication system, the method comprising:
receiving a first request message by a first network device, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
creating first data for the PIN by the first network device; and
sending a first response message to a second network device, a third network device or a first type of application function by the first network device, wherein the first response message comprises first information, the first information is configured to indicate a creation result of the first data, and the first response message is forwarded or transparently transmitted by the third network device to a second type of application function (AF).

19. A first apparatus for processing information, comprising:
a first receiving module, configured to receive a first request message, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC); and
a first creating module, configured to determine first data for the PIN based on the first identifier and the first configuration, wherein the first data is data for generating a policy of the PIN.

20. A second apparatus for processing information, comprising:
a second receiving module, configured to receive a third request message, wherein the third request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
a second creating module, configured to create the PIN based on the third request message; and
a second sending module, configured to send a third response message based on a creation result of the PIN, wherein the third response message comprises second information, and the second information is configured to indicate the creation result of the PIN;
wherein the second sending module is configured to send a first request message, wherein the first request message comprises the first identifier and the first configuration, the first identifier and the first configuration are used for creating first data, and the first data is data for generating a policy of the PIN.

21. A third apparatus for processing information, comprising:
a third receiving module, configured to receive a first response message, wherein the first response message comprises first information, and the first information is configured to indicate a creation result of first data for a personal internet of things network (PIN); and
a third sending module, configured to send the first response message.

22. A fourth apparatus for processing information, comprising:
a fourth sending module, configured to send a first request message, wherein the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC);
a fourth receiving module, configured to receive a first response message, wherein the first response message comprises first information, and the first information is a creation result of first data for the PIN; and
a fourth sending module, configured to send a second request message, wherein a creation of the first data fails, the second request message comprises a second identifier and/or a second configuration, the second request message is configured to request a re-creation of the first data; and the first data is used for generating a policy for the PIN.

23. A fifth apparatus for processing information, comprising:
a fifth sending module, configured to send a first request message, wherein the first request message comprises a first identifier and a first configuration, the first identifier is configured to identify a personal internet of things network element (PINE), and the first configuration is configured to configure a personal internet of things network (PIN), and the PINE comprises a PINE with gateway capability (PEGC);
a fifth receiving module, configured to receive a first response message, wherein the first response message comprises first information, and the first information is configured to indicate a creation result of first data for the PIN; and
a fifth sending module, configured to send a second request message, wherein a creation of the first data fails, the second request message comprises a second identifier and/or a second configuration, the second request message is configured to request a first network device to recreate policy data, the policy data is configured to generate a policy of the PIN, and a second type of AF is located outside a trust domain of the first network device.

24. A communication system, comprising a first network device and further comprising a second network device and/or a third network device,
wherein the first network device is configured to receive a first request message, the first request message comprises a first identifier and a first configuration, the first identifier is configured to identify a personal internet of things network element (PINE), the first configuration is configured to configure a personal internet of things network (PIN), and the PINE comprises a PINE with gateway capability (PEGC); to determine first data for the PIN based on the first identifier and the first configuration, the first data is data for generating a policy of the PIN; to send a first response message to the second network device or the third network device, the first response message comprises first information, the first information is configured to indicate a creation result of the first data, the first response message received by the second network device is sent to the third network device, and the first response message is sent by the third network device to a second type of application function (AF).

25. A communication device, comprising a processor, a transceiver, a memory, and an executable program stored in the memory and capable of being run by the processor, wherein the processor is configured to implement the method for processing information of any one of claims 1 to 5, 6 to 10, 11 to 12, 13 to 14, 15 to 16, 17 and 18 when running the executable program.

26. A computer storage medium, having an executable program stored thereon; wherein after the executable program is executed by a processor, the method for processing information of any one of claims 1 to 5, 6 to 10, 11 to 12, 13 to 14, 15 to 16, 17 and 18 is implemented.
